(19) Europäisches Patentamt
European Patent Office
Office européen des brevets

(11) Veröffentlichungsnummer : **0 051 563**
**B1**

(12) # EUROPÄISCHE PATENTSCHRIFT

(45) Veröffentlichungstag der Patentschrift : **24.04.85**

(51) Int. Cl.⁴ : **C 09 B 29/09**// D06P1/06, D06P3/06

(21) Anmeldenummer : **81810423.4**

(22) Anmeldetag : **26.10.81**

(54) **Monoazoverbindungen.**

(30) Priorität : **30.10.80 CH 8074/80**

(43) Veröffentlichungstag der Anmeldung : **12.05.82 Patentblatt 82/19**

(45) Bekanntmachung des Hinweises auf die Patenterteilung : **24.04.85 Patentblatt 85/17**

(84) Benannte Vertragsstaaten : **CH DE FR GB LI**

(56) Entgegenhaltungen :
**FR-A- 2 018 862**
**FR-A- 2 080 423**
**GB-A- 1 504 795**

(73) Patentinhaber : **CIBA-GEIGY AG**
**Postfach**
**CH-4002 Basel (CH)**

(72) Erfinder : **Schwander, Hansrudolf, Dr.**
**Unterm Schellenberg 189**
**CH-4125 Riehen (CH)**
Erfinder : **Zickendraht, Christian, Dr.**
**Enzianstrasse 2**
**CH-4102 Binningen (CH)**

**EP 0 051 563 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Monoazoverbindungen, deren Mischungen untereinander, Verfahren zu deren Herstellung, sowie deren Verwendung als Farbstoffe zum Färben und Bedrucken von Textilmaterialien, vor allem Wolle und Polyamid.

Die neuen Monoazoverbindungen entsprechen der Formel I

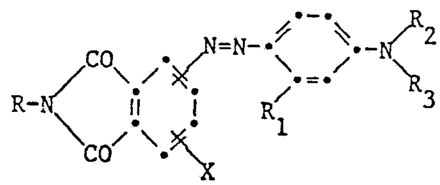

(I)

Die Substituenten X, R, $R_1$, $R_2$ und $R_3$ haben die folgende Bedeutung :

R ein gegebenenfalls durch Alkyl ($C_1$-$C_4$) substituierter Phenyl- oder Naphthylrest, ein gegebenenfalls durch Alkyl ($C_1$-$C_4$) substituierter Cycloalkylrest, ein gegebenenfalls durch Cyano, Halogen, Phenyl oder Sulfophenyl substituierter Alkylrest ($C_1$-$C_8$), oder ein gegebenenfalls durch Halogen substituierter Propenylrest,

X Wasserstoff oder Halogen,

$R_1$ Wasserstoff oder ein Alkylrest ($C_1$-$C_4$),

$R_2$ ein Alkylrest ($C_1$-$C_8$), ein Sulfatoalkylrest ($C_1$-$C_4$), ein Sulfoalkylrest ($C_1$-$C_4$) oder ein Cycloalkylrest, und

$R_3$ ein gegebenenfalls durch Alkyl ($C_1$-$C_4$) substituierter Cycloalkylrest oder

ein Alkylen-($C_1$-$C_4$)- 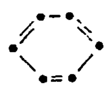 Rest,

worin der Phenylrest noch durch —$SO_3H$ substituiert sein kann, mit der Bedingung, dass die Monoazoverbindung der Formel (1) nur eine und nicht mehr als eine Sulfo- oder Sulfatogruppe enthält.

Dabei sind die Substituenten R, $R_2$ und $R_3$ so miteinander zu kombinieren, dass das Molekül in R, $R_2$ oder $R_3$ eine Sulfo- oder in $R_2$ eine Sulfatogruppe enthält.

Bedeutet R einen Phenyl- oder Naphthylrest, so kann dieser noch einen Alkylsubstituenten ($C_1$-$C_4$) tragen. Steht R für einen Alkylrest, so kann dieser unverzweigt oder verzweigt sein, mit einer Kettenlänge bis zu 8 Kohlenstoffatomen. Als Alkylreste seien genannt der Methyl-, Aethyl-, n- und iso-Propyl-, der n-, sec.- oder tert.-Butyl-, n- oder iso-Pentyl-, n-Hexyl-, n-Heptyl-, n- oder iso-Octyl- oder der 2-Aethylhexylrest. Der Alkylrest kann substituiert sein, dabei kommen als Substituenten in Frage der Phenylrest, der wiederum durch eine Sulfogruppe weitersubstituiert sein kann, die Cyanogruppe oder ein Halogenatom, wie z. B. ein Chloratom. Bedeutet R einen Cycloalkylrest, so kommen solche mittlerer Ringgrösse in Frage, wie z. B. der Cyclopentyl-, -hexyl- oder -heptylrest ; dabei kann der cyclische Rest durch Alkyl ($C_1$-$C_4$) substituiert sein. Bedeutet R einen gegebenenfalls durch ein Halogenatom, wie z. B. ein Chlor- oder Bromatom substituierten Propenylrest, so handelt es sich z. B. um den Propenyl-, 3-Chlor-prop-2-enyl-, 2-Chlor- oder 2-Brom-prop-2-enylrest.

In bevorzugten Monoazoverbindungen der Formel I bedeutet R den gegebenenfalls durch eine oder mehrere Methylgruppen substituierten Cyclohexylrest, oder den Benzyl- oder β-Phenäthylrest, wobei deren Phenylkern durch eine Sulfogruppe weiter substituiert sein kann.

Bedeutet X ein Halogenatom so handelt es sich um das Fluor-, Chlor-, Brom- oder Jodatom, wobei das Bromatom bevorzugt ist.

$R_1$ in der Bedeutung von Alkyl ($C_1$-$C_4$) stellt einen verzweigten, vorzugsweise jedoch unverzweigten Alkylrest dar, wie den Methyl-, Aethyl-, n- und iso-Propyl- oder n-, sec.- oder tert.-Butylrest. Von diesen ist der Methylrest bevorzugt.

Bedeutet $R_2$ einen Alkylrest mit 1 bis 8 Kohlenstoffatomen, so handelt es sich um einen unverzweigten oder verzweigten Alkylrest, wie z. B. um den Methyl-, Aethyl-, n- und iso-Propyl-, den n-, sec.- oder tert.-Butyl-, n- oder iso-Pentyl-, n-Hexyl-, n-Heptyl-, n- oder iso-Octyl- oder den 2-Aethylhexylrest. Bevorzugt sind dabei die Niederalkylreste ($C_2$-$C_4$). Steht $R_2$ für einen Sulfatoalkylrest ($C_1$-$C_4$), oder einen Sulfoalkylrest ($C_1$-$C_4$), so kommen vor allem der Sulfatoäthyl-, der Sulfoäthyl- und Sulfopropylrest in Frage. Bedeutet schliesslich das Symbol $R_2$ einen Cycloalkylrest, so ist ein solcher mittlerer Ringgrösse gemeint, wie z. B. der Cyclopentyl-, -hexyl- oder -heptylrest.

In bevorzugten Monoazoverbindungen steht $R_2$ für den Aethylrest.

Bedeutet $R_3$ einen Cycloalkylrest, so kommen solche mittlerer Ringgrösse in Frage, wie z. B. der Cyclopentyl-, -hexyl- oder -heptylrest ; dabei können diese Reste durch einen Niederalkylrest ($C_1$-$C_4$),

vorzugsweise die Methylgruppe, ein- oder mehrfach substituiert sein. Bedeutet $R_3$ einen

Alkylen-($C_1$-$C_4$)- 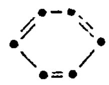 Rest

so ist damit besonders der Benzyl- und der β-Phenäthylrest gemeint. Der Phenylkern dieser Reste kann durch eine Sulfogruppe substituiert sein. Bevorzugt sind solche Monoazoverbindungen in denen $R_3$ die Bedeutung eines Sulfobenzyl- oder β-Sulfophenäthylrestes hat.

In den bevorzugten Monoazoverbindungen der Formel I befindet sich die Azobrücke in p-Stellung zu einer der beiden Carbonylgruppen.

Neben den reinen Monoazoverbindungen der Formel I sind auch die Mischungen isomerer Verbindungen dieser Formel Gegenstand der Erfindung. Die Erfindung betrifft sowohl Monoazoverbindungen der Formel I, bei denen sich die Azobrücke in o- bzw. p-Stellung zu einer der beiden Carbonylgruppen des Phthalimidrestes befindet, als auch deren Gemische untereinander, wie z. B. ein Gemisch einer Monoazoverbindung der Formel I worin die Azobrücke in p-Stellung zu einer der Carbonylgruppen gebunden ist mit einer Monoazoverbindung der Formel I worin die Azobrücke in o-Stellung zu einer der Carbonylgruppen gebunden ist.

Bei der Auswahl der Substituenten R, $R_2$ und $R_3$ gilt, dass einer dieser Substituenten eine Sulfogruppe oder der Rest $R_2$ eine Sulfatogruppe enthalten muss. Bedeutet der Rest R beispielsweise einen gegebenenfalls durch Alkyl ($C_1$-$C_4$) substituierten Phenyl- oder Naphthylrest, einen gegebenenfalls durch Alkyl ($C_1$-$C_4$) substituierten Cycloalkylrest, einen gegebenenfalls durch Cyano, Halogen oder Phenyl substituierten Alkylrest ($C_1$-$C_8$) oder einen gegebenenfalls durch Halogen substituierten Propenylrest, so kommen für die Reste $R_2$ und $R_3$ z. B. die folgenden Kombinationsmöglichkeiten in Frage : $R_2$ ein Alkyl- oder Cycloalkylrest und $R_3$ ein

Alkylen-($C_1$-$C_4$)- 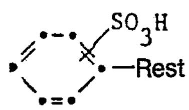 —Rest

oder $R_2$ ein Sulfatoalkyl-($C_1$-$C_4$)- oder Sulfoalkyl-($C_1$-$C_4$)-Rest und $R_3$ ein

Alkylen-($C_1$-$C_4$)- 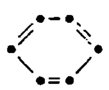

oder Cycloalkylrest. In einer bevorzugten Kombination bedeutet $R_2$ den Aethylrest und $R_3$ einen Sulfobenzyl- oder β-Sulfophenäthylrest.

Enthält hingegen der Rest R eine Sulfogruppe, beispielsweise ein durch Sulfophenyl substituierter Alkylrest ($C_1$-$C_8$), bevorzugte Reste sind der Sulfobenzyl-, oder der β-Sulfophenäthylrest oder der Rest der Formel

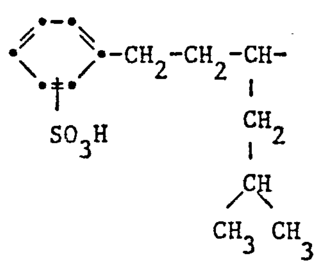

so bedeutet beispielsweise $R_2$ einen Alkylrest ($C_1$-$C_8$), insbesondere Aethyl, oder einen Cycloalkylrest, insbesondere Cyclohexyl, und $R_3$ einen gegebenenfalls durch Alkyl ($C_1$-$C_4$), vor allem Methyl, substituierten Cycloalkylrest, insbesondere Cyclohexyl, oder einen

Alkylen-($C_1$-$C_4$)- 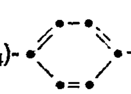—Rest

vor allem einen Benzyl- oder β-Phenäthylrest.

In bevorzugten Monoazoverbindungen der Formel I ist R ein gegebenenfalls durch Alkyl ($C_1$-$C_4$) substituierter Phenylrest, ein gegebenenfalls durch Alkyl ($C_1$-$C_4$) substituierter Cyclohexylrest, ein gegebenenfalls durch Cyano, Phenyl oder Sulfophenyl substituierter Alkylrest ($C_1$-$C_8$) oder ein gegebenenfalls durch Halogen substituierter Propenylrest.

Bevorzugt sind ferner Monoazoverbindungen der Formel I, worin $R_2$ einen unsubstituierten Alkylrest ($C_2$-$C_8$) oder Cyclohexyl und $R_3$ einen

Alkylen-($C_1$-$C_2$)- 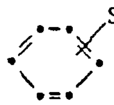 Rest

bedeutet, oder worin $R_2$ Sulfoäthyl, Sulfopropyl oder Sulfatoäthyl und $R_3$

Alkylen-($C_1$-$C_2$)- 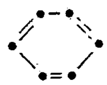

oder gegebenenfalls durch Methyl substituiertes Cyclohexyl bedeutet. Vorzugsweise bedeutet $R_2$ Sulfatoäthyl.

In einer bevorzugten Kombination bedeutet

R einen gegebenenfalls durch eine oder mehrere Methylgruppen substituierten Cyclohexylrest, den Benzyl- oder β-Phenäthylrest, oder einen unverzweigten oder verzweigten Alkyl-($C_2$-$C_8$)-rest, und $R_2$ Aethyl, Octyl oder Cyclohexyl und $R_3$ den

Alkylen-($C_1$-$C_2$)- 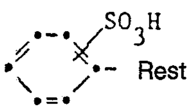 Rest

oder $R_2$ bedeutet Sulfatoäthyl, Sulfoäthyl oder Sulfopropyl und $R_3$

Alkylen-($C_1$-$C_2$)- 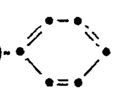

oder gegebenenfalls durch Methyl substituiertes Cyclohexyl.

Bevorzugt sind ferner Monoazoverbindungen der Formel I, worin R Cyclohexyl bedeutet.

Besonders bevorzugt sind die Isomerengemische der Monoazoverbindungen der Formeln

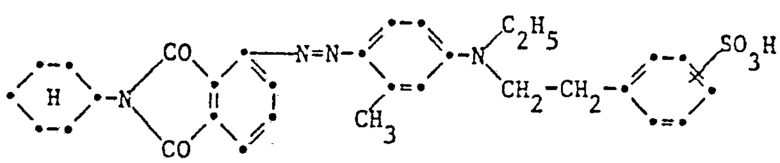

und

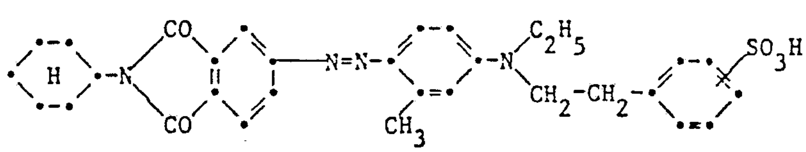

sowie die Monoazoverbindung der Formel

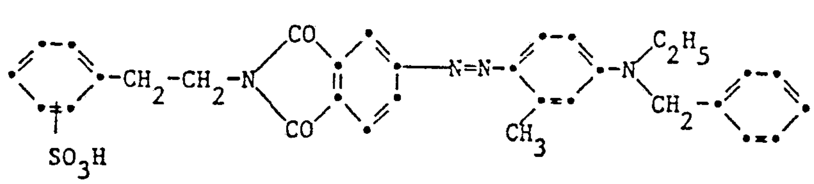

Die erfindungsgemässen Monoazoverbindungen der Formel I können nach an sich bekannter Art und Weise hergestellt werden, beispielsweise derart, dass man ein Amin der Formel II

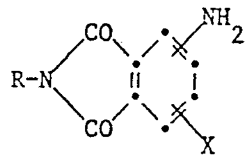

(II)

diazotiert und mit einer Kupplungskomponente der Formel III

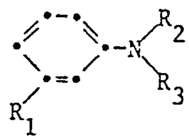

(III)

kuppelt. Die Symbole R, X, $R_1$, $R_2$ und $R_3$ haben die angegebene Bedeutung, mit der Bedingung, dass einer der Reste R, $R_2$ und $R_3$ eine Sulfogruppe oder der Rest $R_2$ eine Hydroxygruppe enthält. Ist der Rest $R_2$ durch eine Hydroxygruppe substituiert, so wird diese nach erfolgter Kupplung mit z. B. Sulfaminsäure zur Sulfatogruppe verestert.

Eine Verfahrensweise ist dadurch gekennzeichnet, dass man ein Amin der Formel II, das keine Sulfogruppe im Rest R enthält diazotiert und auf eine Kupplungskomponente der Formel III kuppelt, worin $R_2$ einen Alkyl-($C_1$-$C_8$)- oder Cycloalkylrest und $R_3$ einen

Alkylen-($C_1$-$C_4$)- 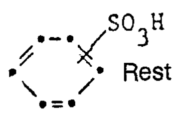 Rest

bedeutet, oder worin $R_2$ einen Hydroxyalkyl-($C_1$-$C_4$)- oder Sulfoalkyl-($C_1$-$C_4$)-Rest und $R_3$ einen

Alkylen-($C_1$-$C_4$)- 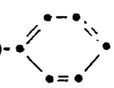 Rest

oder einen gegebenenfalls durch Alkyl ($C_1$-$C_4$) substituierten Cycloalkylrest bedeutet und gegebenenfalls anschliessend falls $R_2$ eine Hydroxygruppe enthält, diese zur Sulfatogruppe verestert.

Eine weitere Verfahrensweise ist dadurch gekennzeichnet, dass man ein Amin der Formel II, worin R ein durch Sulfophenyl substituierter Alkylrest ($C_1$-$C_8$) ist, diazotiert und auf eine Kupplungskomponente der Formel III kuppelt, worin $R_2$ ein Alkylrest ($C_1$-$C_8$) oder ein Cycloalkylrest und $R_3$ ein gegebenenfalls durch Alkyl ($C_1$-$C_4$) substituierter Cycloalkylrest oder ein

Alkylen-($C_1$-$C_4$)- 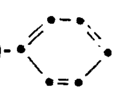 Rest

ist.

Vorzugsweise verwendet man Amine der Formel II, worin R ein gegebenenfalls durch Alkyl ($C_1$-$C_4$) substituierter Phenylrest, ein gegebenenfalls durch Alkyl ($C_1$-$C_4$) substituierter Cyclohexylrest, ein gegebenenfalls durch Cyano, Phenyl oder Sulfophenyl substituierter Alkylrest ($C_1$-$C_8$) oder ein gegebenenfalls durch Halogen substituierter Propenylrest ist und X die unter Formel II angegebene Bedeutung hat, insbesondere Wasserstoff oder Brom ist.

Ein weiteres bevorzugtes Verfahren ist dadurch gekennzeichnet, dass man ein Amin der Formel II, das keine Sulfogruppe im Rest R enthält, diazotiert und auf eine Kupplungskomponente der Formel III kuppelt, worin $R_1$ Wasserstoff oder Methyl, $R_2$ einen unsubstituierten Alkylrest ($C_2$-$C_8$) oder Cyclohexyl und $R_3$ einen

Alkylen-($C_1$-$C_2$)- 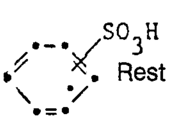 Rest

bedeutet, oder worin $R_2$ Sulfoäthyl, Sulfopropyl oder Hydroxyäthyl und $R_3$

Alkylen-($C_1$-$C_2$)- 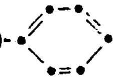

oder gegebenenfalls durch Methyl substituiertes Cyclohexyl bedeutet, und gegebenenfalls anschliessend falls $R_2$ eine Hydroxygruppe enthält, diese zur Sulfatogruppe verestert.

Ein ebenfalls bevorzugtes Verfahren ist dadurch gekennzeichnet, dass man ein Amin der Formel II, worin R einen Sulfobenzyl- oder β-Sulfophenäthylrest oder einen Rest der Formel

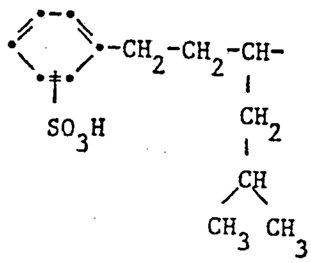

und X Wasserstoff oder Brom bedeutet, diazotiert und auf eine Kupplungskomponente der Formel III, worin $R_1$ Wasserstoff oder Methyl, $R_2$ Aethyl und $R_3$ den Benzyl- oder β-Phenyläthylrest bedeutet, kuppelt.

Ein besonders bevorzugtes Verfahren ist dadurch gekennzeichnet, dass man ein Amin der Formel II, worin

R einen gegebenenfalls durch eine oder mehrere Methylgruppen substituierten Cyclohexylrest, den Benzyl- oder β-Phenäthylrest, oder einen unverzweigten oder verzweigten Alkyl-($C_2$-$C_8$)-rest, und

X Wasserstoff oder Brom bedeutet, diazotiert und auf eine Kupplungskomponente der Formel III kuppelt, worin

$R_1$ Wasserstoff oder Methyl,

$R_2$ Aethyl, Octyl oder Cyclohexyl und

$R_3$ den

Alkylen-($C_1$-$C_2$)- 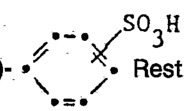 Rest

bedeutet, oder worin $R_2$ Sulfatoäthyl, Sulfoäthyl oder Sulfopropyl und $R_3$

Alkylen-($C_1$-$C_2$)- 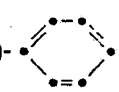

oder gegebenenfalls durch Methyl substituiertes Cyclohexyl bedeutet. Vorzugsweise verwendet man Kupplungskomponenten der Formel III, worin $R_2$ Sulfatoäthyl bedeutet.

Ein weiteres besonders bevorzugtes Verfahren ist dadurch gekennzeichnet, dass man Amine der Formel II verwendet, worin R Cyclohexyl ist.

Das bevorzugte Isomerengemisch der Monoazoverbindungen der Formeln

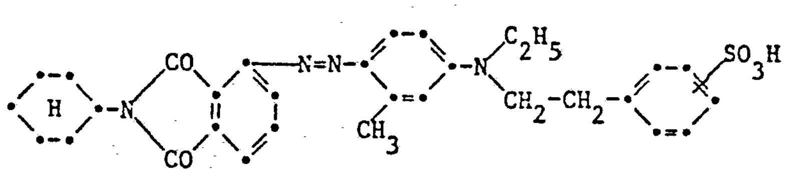

und

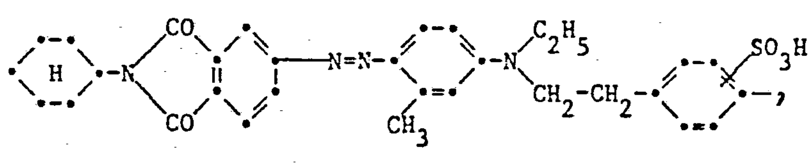

wird erhalten, indem man ein Isomerengemisch aus 3-Amino- und 4-Amino-N-cyclohexyl-phthalimid diazotiert und auf N-Aethyl-N-sulfophenäthyl-3-methylanilin kuppelt.

Die ebenfalls bevorzugte Monoazoverbindung der Formel

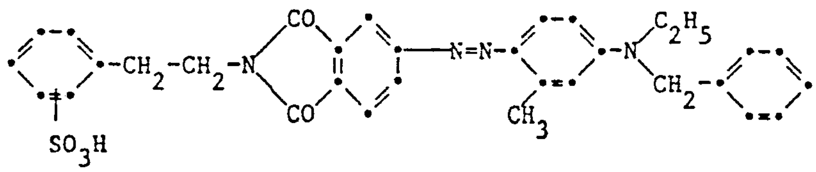

wird hergestellt, indem man 4-Amino-N-sulfophenäthylphthalimid diazotiert und auf N-Aethyl-N-benzyl-3-methylanilin kuppelt.

Die Amine der Formel II sind bekannt und werden nach bekannten Methoden hergestellt. So z. B. durch Umsetzung von Nitro-o-phthalsäure mit primären Aminen der Formel R—$NH_2$ zu den entsprechenden Phthalimidderivaten und anschliessende Reduktion der Nitro- zur Aminogruppe. Von der Vielzahl der möglichen Phthalimidderivate, die als Diazokomponenten in Frage kommen, seien im folgenden beispielsweise genannt :

4-Amino-N-cyclohexyl-phthalimid,
4-Amino-N-[2-methyl-phenyl]-phthalimid,
4-Amino-N-[2,4-dimethyl-phenyl]-phthalimid,
4-Amino-N-benzyl-phthalimid,
4-Amino-N-[2-äthyl-hexyl]-phthalimid,
4-Amino-N-isopropyl-phthalimid,
4-Amino-N-[3,3,5-trimethyl-cyclohexyl]-phthalimid,
4-Amino-N-β-phenäthyl-phthalimid,
4-Amino-N-n-propyl-phthalimid,
4-Amino-N-[1-methyl-propyl]-phthalimid,
4-Amino-N-[3-chloro-prop-2-enyl]-phthalimid,
4-Amino-N-[2-bromo-prop-2-enyl]-phthalimid,
4-Amino-N-[2-chloro-prop-2-enyl]-phthalimid,
4-Amino-N-äthyl-phthalimid,
4-Amino-N-β-cyanoäthyl-phthalimid,
4-Amino-N-propenyl-phthalimid,
4-Amino-N-sulfophenäthyl-phthalimid,
4-Amino-N-[1-isobutyl-3-sulfophenyl-propyl]-phthalimid sowie die entsprechenden 3-Aminophthalimide und Isomerengemische der 3- und 4-Aminophthalimide.

Auch können die genannten N-substituierten 4-Amino-phthalimidderivate im Benzolkern monohalogeniert sein. Als mono-Bromderivate kommen z. B. in Frage :

4-Amino-bromo-N-isopropyl-phthalimid,
4-Amino-bromo-N-äthyl-phthalimid,
4-Amino-bromo-N-[1-methyl-propyl]-phthalimid.

Als Aminophthalimidderivat, dessen N-Substituent eine Sulfogruppe aufweist seien beispielsweise das 3- oder 4-Amino-N-[β-sulfophenäthyl]-phthalimid und das 3- oder 4-Amino-N-[α-sec.-butyl-γ-sulfophenyl-propyl]-phthalimid genannt.

Entsprechend können auch die analogen 3-Amino-phthalimidderivate oder deren Mischungen mit 4-Amino-phthalimidderivaten verwendet werden.

Die Kupplungskomponenten der Formel III sind auch bekannt und werden nach bekannten Methoden hergestellt. Von der Vielzahl der möglichen Anilinderivate, die als Kupplungskomponente in Frage kommen, seien im folgenden beispielsweise genannt :

N-Sulfobenzyl-N-äthyl-3-methylanilin,
N-Sulfobenzyl-N-äthyl-anilin,
N-β-Sulfophenäthyl-N-äthyl-anilin,
N-β-Sulfophenäthyl-N-äthyl-3-methylanilin,
N-Sulfobenzyl-N-cyclohexyl-3-methylanilin,
N-Sulfobenzyl-N-[2-äthyl-hexyl]-3-methylanilin,
N-Benzyl-N-β-sulfoäthyl-3-methylanilin,
N-Benzyl-N-γ-sulfopropyl-anilin,
N-Benzyl-N-β-sulfoäthyl-anilin,
N-β-Phenäthyl-N-β-sulfoäthyl-3-methylanilin,

N-β-Phenäthyl-N-γ-sulfopropyl-3-methylanilin,
N-Benzyl-N-γ-sulfopropyl-3-methylanilin,
N-Cyclohexyl-N-β-sulfoäthyl-3-methylanilin,
N-Cyclohexyl-N-γ-sulfopropyl-3-methylanilin,
N-β-Phenäthyl-N-γ-sulfopropyl-anilin,
N-β-Hydroxyäthyl-N-benzyl-anilin,
N-β-Hydroxyäthyl-N-benzyl-3-methylanilin,
N-β-Hydroxyäthyl-N-cyclohexyl-3-methylanilin,
N-β-Hydroxyäthyl-N-[3,3,5-trimethyl-cyclohexyl]-3-methylanilin,
N-β-Hydroxyäthyl-N-cyclohexyl-anilin,
N-β-Hydroxyäthyl-N-β-phenäthyl-3-methylanilin,
N-Benzyl-N-äthyl-3-methylanilin,
N-Benzyl-N-äthyl-anilin,
N-β-Phenäthyl-N-äthyl-3-methylanilin,
N-β-Phenäthyl-N-äthyl-anilin.

Sowohl die Diazotierung der Verbindung II, als auch die Kupplung der diazotierten Verbindung II mit der Verbindung III wird nach an sich bekannten Methoden durchgeführt [siehe z. B. SCHUENDEHUETTE in Houben-Weyl, Bd. 10/3, S. 213-465 (1965)].

Verwendung finden die neuen Monoazoverbindungen der Formel I vor allem als Farbstoffe zum Färben und Bedrucken von Textilmaterialien, welche mit anionischen Farbstoffen färbbar sind, vor allem Polyamidmaterialien und Wolle. Das Färben kann nach beliebigen für das entsprechende Substrat geeigneten, kontinuierlichen oder diskontinuierlichen Methoden (z. B. Auszieh-, Klotz- oder Druckverfahren) erfolgen.

Die erfindungsgemässen Monoazofarbstoffe zeichnen sich im Färbeverfahren bei pH 6 durch einen hohen Ausziehgrad, gutes Migrieren und beim Färben von Polyamid durch gutes Decken der Streifigkeit aus. Die mit den Farbstoffen der Formel I erhaltenen Ausfärbungen weisen gute Allgemeinechtheiten auf, wie vor allem eine sehr gute Nassechtheit, gute Lichtechtheit und gute Formaldehydbeständigkeit.

Die Farbstoffe sind gut hartwasserbeständig und haben eine hohe Wasserlöslichkeit. Weiterhin zeigen sie gute Ergebnisse in der Kombinationsfärbung mit Monosulfosäurefarbstoffen, welche bei pH 6 gefärbt werden.

Die zu färbenden Textilmaterialien können dabei in den verschiedensten Verarbeitungsformen wie Gewirke, Gewebe, Garne und Fasern sowie fertigen Artikeln, wie Hemden vorliegen.

Aus der FR-A-20 18 862 ist ein ähnlicher Monoazofarbstoff bekannt, der jedoch nicht alle guten Eigenschaften der erfindungsgemässen Monoazofarbstoffe aufweist.

In den nachfolgenden Beispielen bedeuten die Teile, sofern nichts anderes angegeben wird, Gewichtsteile und die Prozente Gewichtsprozente sowie die Gradangaben Celsiusgrade. Sie sollen die Erfindung erläutern.

## Beispiel 1

42 Teile 4-Nitrobenzol-1,2-dicarbonsäure werden bei Raumtemperatur in 120 Teilen Eisessig verrührt und zu der so entstandenen Suspension 36 Teile Cyclohexylamin zugetropft. Dabei steigt die Temperatur auf 45 °C, und man erhält eine klare Lösung. Die Lösung wird noch zwei Stunden unter Rückfluss gekocht und dann in 1 000 Teilen Wasser eingetragen. Das abgeschiedene 4-Nitro-N-cyclohexylphthalimid wird abfiltriert, in 150 Teilen Dimethylformamid gelöst und mit Palladium-Kohle als Katalysator hydriert. Dabei erhält man das Amin der Formel

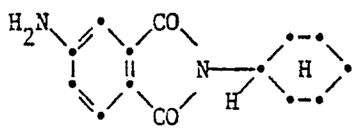

das sich aus der zuvor filtrierten Hydrierlösung durch Zugabe von Wasser abscheiden lässt. Nach Filtrieren und Trocknen erhält man ein hellgelbes Pulver mit einem Schmelzpunkt von 192-193 °C.

Verwendet man, bei sonst gleichem Vorgehen, anstelle von 4-Nitrobenzol-1,2-dicarbonsäure die in der folgenden Tabelle 1 unter Kolonne I aufgeführten Nitrobenzoldicarbonsäuren und anstelle von Cyclohexylamin die unter Kolonne II aufgeführten Amine, so erhält man nach Reduktion der entsprechenden Phthalimidderivate die unter Kolonne III aufgeführten Diazokomponenten.

(Siehe Tabelle 1 Seite 9 f.)

Tabelle 1

| Nr. | I | II | III |
|---|---|---|---|
| 2 | 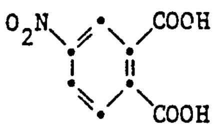 | 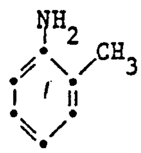 | 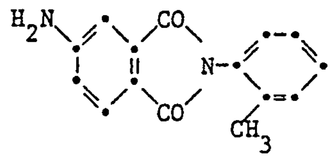 Smp. 181-183° |
| 3 | do. | 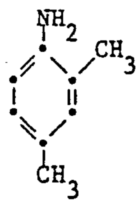 | 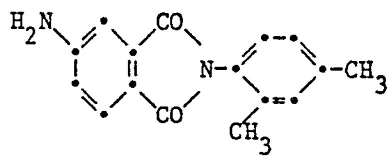 Smp. 164-166°C |
| 4 | do. | 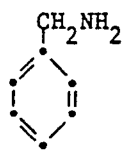 | 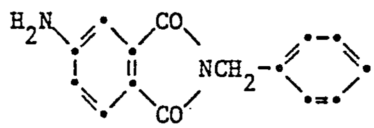 Smp. 125-127°C |
| 5 | do. | 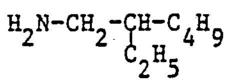 | 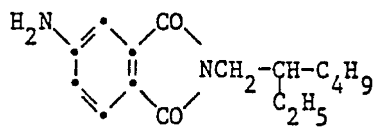 Smp. 64-66°C |
| 6 | do. | $H_2N-CH_2-CH_3$ | 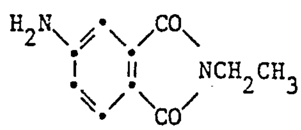 |
| 7 | do. | 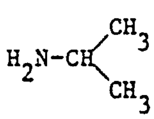 | 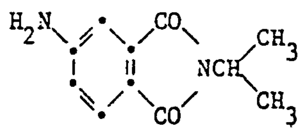 Smp. 128-130°C |

Tabelle 1 (Fortsetzung)

| Nr. | I | II | III |
|---|---|---|---|
| 8 | 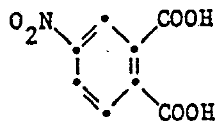 | 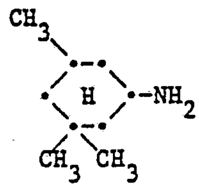 | 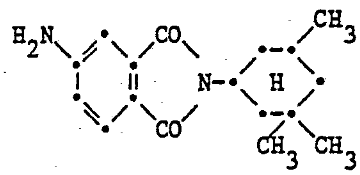 |
| 9 | do. | 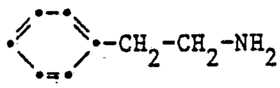 | 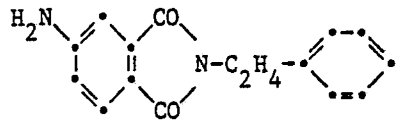 |
| 10 | do. | $n-C_3H_7-NH_2$ | 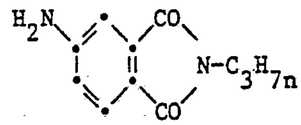 |
| 11 | 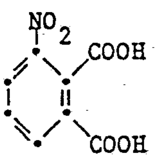 | 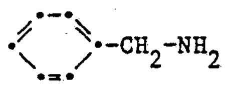 | 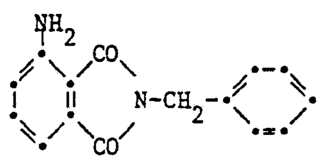 |
| 12 | do. | 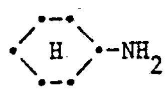 | 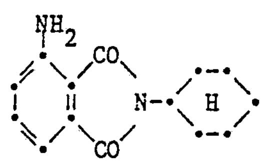 |
| 13 | do. | 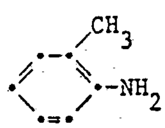 | 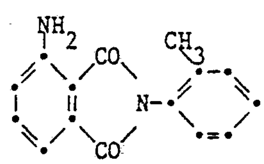 |
| 14 | do. | 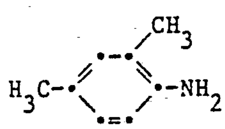 | 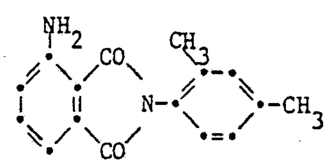 |

Tabelle 1 (Fortsetzung)

| Nr. | I | II | III |
|---|---|---|---|
| 15 | 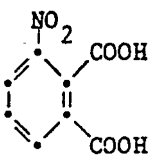 | 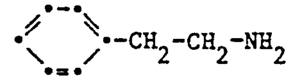 | 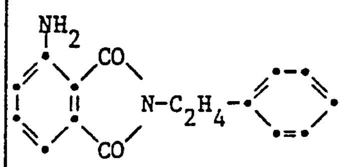 |
| 16 | do. | 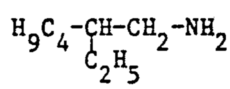 | 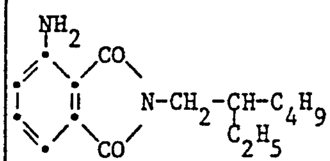 |
| 17 | do. | $C_2H_5$-$NH_2$ | 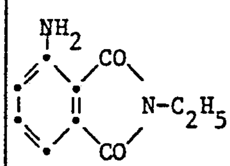 |
| 18 | do. | 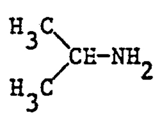 | 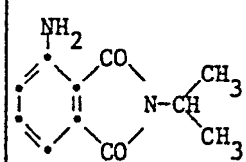 |
| 19 | do. | 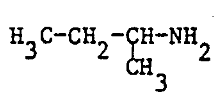 | 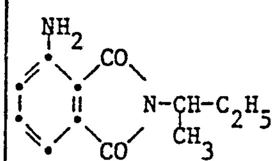 |

Beispiel 20

21 Teile des Isomerengemisches 3- und 4-Nitrophthalsäure, erhalten durch Nitrierung von Phthalsäure, werden in 100 Teilen Eisessig gelöst, 15 Teile Cyclohexylamin zugegeben und vier Stunden am Rückfluss gerührt. Dann wird der Eisessig im Vakuum abdestilliert, der Rückstand in 100 Teilen Dimethylformamid gelöst und mit Palladium-Kohle als Katalysator hydriert. Aus der, vom Katalysator abfiltrierten Lösung wird das Gemisch der isomeren Amine der Formeln

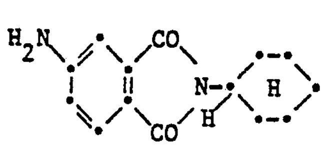 und 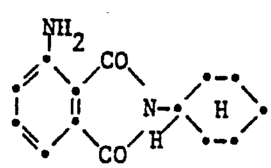

durch Verdünnen mit Wasser als hellgelbes Pulver in guter Ausbeute abgeschieden.

Beispiel 21

30 Teile der in Tabelle 1 unter 7, Kolonne III angegebenen Verbindung werden in 300 Teilen Tetrachlorkohlenstoff suspendiert, 30 Teile N-Brom-succinimid zugesetzt und anschliessend 4 Stunden gerührt und unter Rückfluss gekocht. Zur Aufarbeitung wird filtriert und der Rückstand aus Eisessig umkristallisiert. Das Produkt hat die Formel :

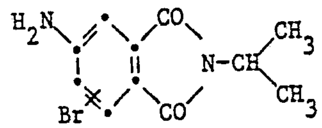

Smp. 181-183 °C.

Verwendet man bei sonst gleichem Vorgehen anstelle des Isopropylimids äquivalente Mengen des N-äthyl- bzw. N-sek.-butylimids, so erhält man die Verbindungen der Formeln

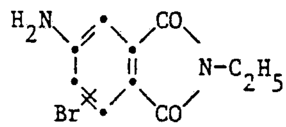

und

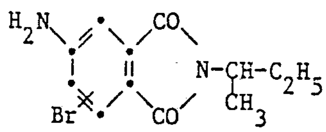

Verwendet man die entsprechenden 3-Amino-phthalimide, so erhält man bei gleichem Vorgehen die Verbindungen der Formeln

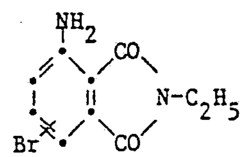

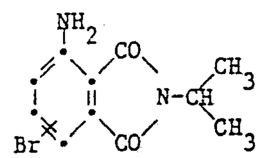

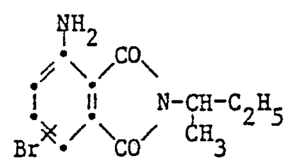

Beispiel 22

38,5 Teile 4-Nitrophthalimid, 14 Teile Kaliumcarbonat und 45 Teile 2,3-Dichlorpropen werden in 100 Teilen Dimethylformamid 24 Stunden bei 80 °C gerührt. Das Reaktionsgemisch wird zur Aufarbeitung in 1 000 Teile Wasser eingetragen. Das sich dabei abscheidende Produkt wird abfiltriert und anschliessend wieder in 200 Teilen Eisessig gelöst. Die Lösung wird bei 50 °C mit 38 Teilen Eisenpulver versetzt, wobei die Reduktion unter deutlicher Wärmeentwicklung einsetzt. Zur Aufarbeitung filtriert man vom Eisenpulver ab und verdünnt das Filtrat mit Wasser, wobei das Amin der folgenden Formel ausfällt :

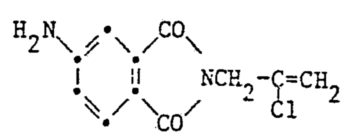

Smp. 165-167 °C.

Nach dem selben Verfahren können die in der Tabelle 2 aufgeführten Verbindungen hergestellt werden. In Kolonne I ist das Ausgangsprodukt, in Kolonne II das Halogenalken und in Kolonne III das Endprodukt angegeben, wie es nach Reduktion der Nitrofunktion erhalten wird.

Tabelle 2

| Nr. | I | II | III |
|---|---|---|---|
| 23 | 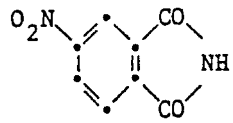 | $ClCH_2-CH=CHCl$ | 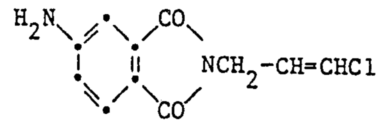 Smp. 186-188°C |
| 24 | do. | 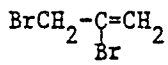 | 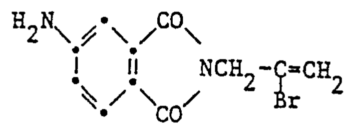 Smp. 151-153°C |

Beispiel 25

Zu einem Gemisch, bestehend aus 38,4 g 4-Nitro-phthalimid, 13,3 g Acrylnitril und 15 ml Dimethylformamid gibt man bei 60 °C 0,4 ml 50 %ige Kaliumhydroxidlösung. Man steigert sodann die Temperatur auf 120 °C und rührt ca. 30 Minuten bei dieser Temperatur, bis aufgrund des Dünnschicht-Chromatogramms die Umsetzung vollständig abgelaufen ist. Zur Isolierung des Produkts giesst man die noch heisse Lösung auf kaltes Wasser, filtriert das ausgefallene Produkt der Formel

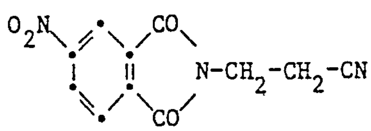

ab und wäscht mit Wasser nach. Durch katalytische Hydrierung erhält man die Aminoverbindung der Formel

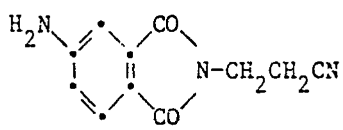

Ausgehend von 3-Nitro-phthalimid wird in analoger Weise die Verbindung der Formel

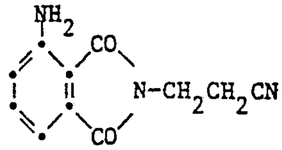

erhalten.

Beispiel 26

Zu einem Gemisch bestehend aus 5 g der Verbindung der Formel

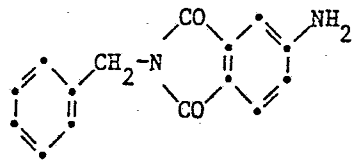

in fein verteilter Form und 30 ml Isopropanol gibt man bei 0 °C 6 ml 36 %ige Salzsäure. Zu diesem Gemisch lässt man bei einer Temperatur von 0-2 °C unter Niveau langsam 5 ml 4n Nitritlösung zutropfen. Man rührt noch 30 Minuten in der Kälte nach und versetzt dann das Reaktionsgemisch mit 0,4 g Harnstoff. Nach weiteren 15 Minuten gibt man das Gemisch zu einer neutralen Lösung von 2/100 Mol der Verbindung der Formel

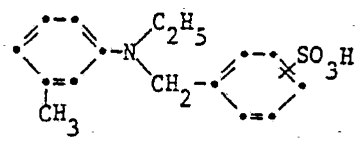

die als Natriumsalz vorliegt, in 100 ml Wasser. Durch Zugabe von Ammoniumacetat stellt man den pH-Wert des Reaktionsgemisches auf 3 und rührt bei 0-5 °C bis zur Beendigung der Kupplung. Zur Aufarbeitung erniedrigt man den pH-Wert auf 2 und isoliert das ausgefallene Produkt durch Filtration.

Man schlämmt anschliessend das Nutschgut in 150 ml Wasser auf, stellt auf pH 7, filtriert das ausgefallene Natriumsalz des Farbstoffes der Formel

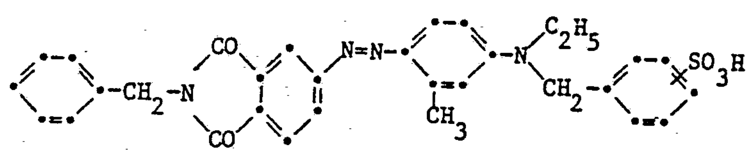

ab und trocknet das Produkt im Vakuum bei 70 °C. Man erhält so ein rotes Pulver, welches sich in Wasser mit roter Farbe löst.

Bei pH 6 auf Polyamid gefärbt, erhält man mit diesem Farbstoff rote Färbungen, welche gute Nassechtheiten und eine gute Lichtechtheit aufweisen. Der Farbstoff zeigt einen guten Aufbau und einen hohen Ausziehgrad, ferner gutes Migrierverhalten und gutes Decken der Streifigkeit.

Verwendet man bei sonst gleichem Vorgehen anstelle der oben aufgeführten Kupplungskomponente eine äquivalente Menge der Kupplungskomponente der Formel

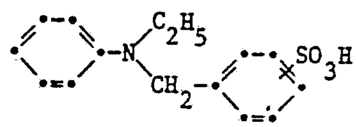

so erhält man den Farbstoff der Formel

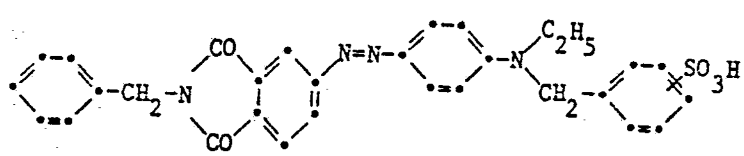

welcher Polyamid in einem gelbstichigen Rot färbt, im übrigen jedoch ähnliche Eigenschaften aufweist.

In analoger Weise werden die in Tabelle 3 aufgeführten Farbstoffe erhalten, welche Polyamid aus schwach saurem Bad ebenfalls in roten Tönen mit guten Echtheitseigenschaften anfärben.

(Siehe Tabelle 3 Seite 15 f.)

Tabelle 3

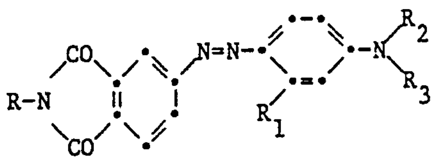

| Nr. | R | $R_1$ | $R_2$ | $R_3$ |
|---|---|---|---|---|
| 27 | 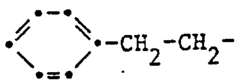 | $-CH_3$ | $-C_2H_5$ | 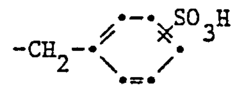 |
| 28 | do. | H | do. | do. |
| 29 | 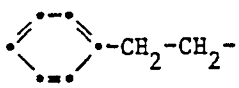 | $-CH_3$ | $-C_2H_5$ | 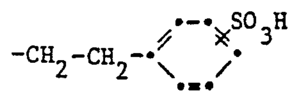 |
| 30 | do. | H | do. | do. |
| 31 | 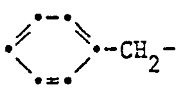 | $-CH_3$ | do. | do. |
| 32 | do. | H | do. | do. |
| 33 | 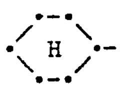 | do. | do. | do. |
| 34 | do. | $-CH_3$ | do. | do. |
| 35 | do. | do. | do. | 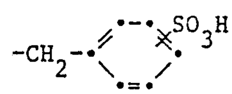 |
| 36 | do. | H | do. | do. |
| 37 | 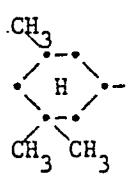 | do. | do. | do. |

Tabelle 3 (Fortsetzung)

| Nr. | R | $R_1$ | $R_2$ | $R_3$ |
|---|---|---|---|---|
| 38 | 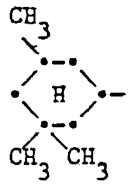 | $-CH_3$ | $C_2H_5$ | 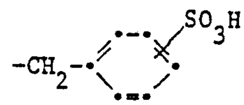 |
| 39 | do. | do. | do. | 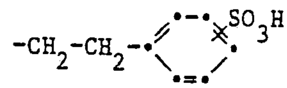 |
| 40 | do. | H | do. | do. |
| 41 | $H_9C_4-CH-CH_2-$<br>$C_2H_5$ | $-CH_3$ | do. | 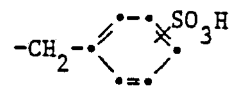 |
| 42 | do. | H | do. | do. |
| 43 | 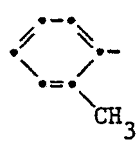 | $-CH_3$ | $-C_2H_5$ | 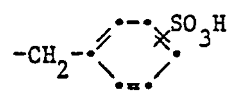 |
| 44 | 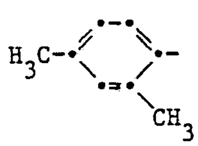 | do. | do. | do. |
| 45 | $NC-CH_2-CH_2-$ | do. | do. | do. |
| 46 | do. | do. | do. | 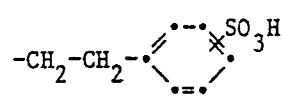 |
| 47 | $H_2C=CH-CH_2-$ | do. | do. | 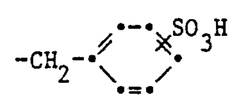 |
| 48 | $H_2C=C-CH_2-$<br>Cl | do. | do. | do. |
| 49 | $ClHC=CH-CH_2-$ | do. | do. | do. |
| 50 | $H_5C_2-$ | do. | 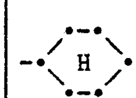 | do. |
| 51 | $n-H_7C_3-$ | do. | do. | do. |

Tabelle 3 (Fortsetzung)

| Nr. | R | $R_1$ | $R_2$ | $R_3$ |
|---|---|---|---|---|
| 52 | $H_5C_2-$ | $-CH_3$ | $-CH_2-\underset{C_2H_5}{CH}-C_4H_9$ | $-CH_2-$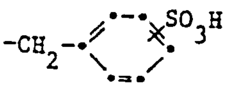 |
| 53 | 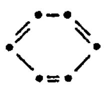$-CH_2-$ | $-CH_3$ | $-C_2H_4-SO_3H$ | $-CH_2-$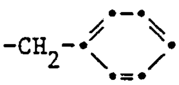 |
| 54 | do. | H | do. | do. |
| 55 | do. | $-CH_3$ | do. | $-CH_2-CH_2-$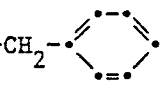 |
| 56 | do. | do. | $n-C_3H_6-SO_3H$ | do. |
| 57 | do. | do. | do. | $-CH_2-$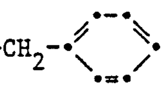 |
| 58 | do. | $-CH_3$ | $-C_2H_4-SO_3H$ | 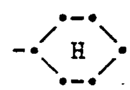 |
| 59 | do. | do. | $n-C_3H_6-SO_3H$ | do. |
| 60 | 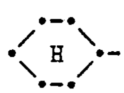 | do. | do. | do. |
| 61 | do. | do. | $-C_2H_4-SO_3H$ | do. |
| 62 | do. | do. | do. | $-CH_2-$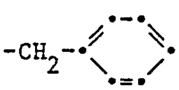 |
| 63 | do. | do. | $n-C_3H_6-SO_3H$ | do. |
| 64 | do. | do. | do. | $-CH_2-CH_2-$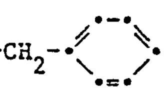 |
| 65 | do. | do. | $-C_2H_4-SO_3H$ | do. |

Beispiel 66

Ein Gemisch, bestehend aus 4,90 g isomerer Verbindungen der Formeln

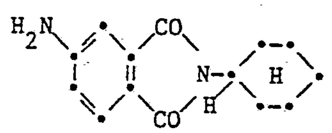

und

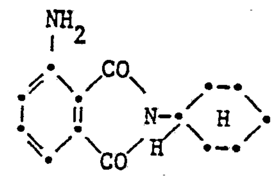

30 ml Isopropanol und 6 ml 36 %iger Salzsäure versetzt man langsam mit 5 ml einer 4n-Natriumnitritlösung, wobei man die Temperatur bei 0-2 °C hält. Man rührt anschliessend noch 1 Stunde bei derselben Temperatur, worauf man 0,40 g Harnstoff zugibt. Nach weiteren 15 Minuten lässt man die Diazolösung zu einer neutralen Lösung von 2/100 Mol N-Benzyl-N-äthyl-m-toluidin-sulfosäure in 100 ml Wasser zulaufen, wobei man den pH-Wert durch Zugabe von 30 %iger Ammonacetat-Lösung bei 3-4 hält. Nach vollständiger Kupplung erhitzt man das Gemisch auf 90° und versetzt mit 10 Vol% Kochsalz, lässt dann erkalten und isoliert das Farbstoffgemisch durch Filtration. Man schlämmt das Nutschgut mit 30 ml Wasser an, gibt 50 ml 2n-Salzsäure zu und erhitzt auf 90°, wobei sich das Farbstoffgemisch als Oel abscheidet. Man dekantiert ab und löst den Rückstand wieder mit 50 ml Wasser, worauf man bei 90° wieder mit 10 ml 2n-Salzsäure fällt. Nach Abdekantieren löst man den Rückstand in 200 ml Wasser, stellt den pH-Wert auf 7,0 mit Natronlauge und isoliert das Farbstoffgemisch durch Eindampfen im Vakuum. Das Farbstoffgemisch enthaltend die Farbstoffe der Formeln

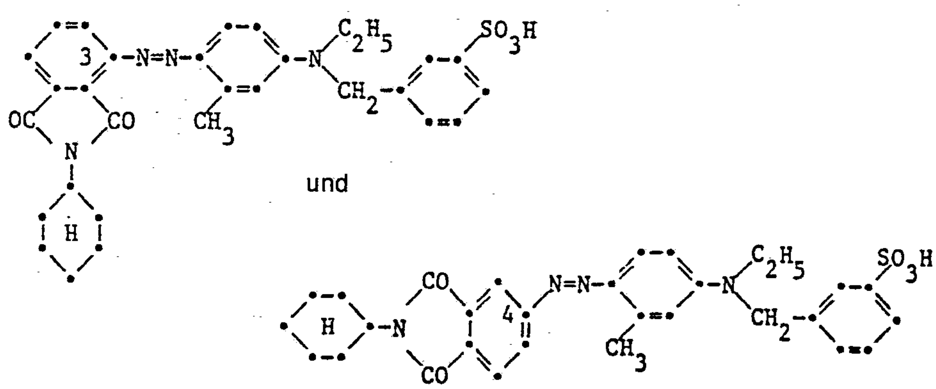

und

liegt als ein rotes Pulver vor, das sich in Wasser leicht mit roter Farbe löst. Die mit diesem Farbstoffgemisch auf Polyamid-Material erzeugten roten Färbungen sind gut licht- und nassecht, ferner zeigt das Farbstoffgemisch eine gute Migration und gutes Decken der Streifigkeit.

In analoger Weise, bei Verwendung äquivalenter Mengen der entsprechenden Kupplungskomponenten, werden die Farbstoffgemische der folgenden Tabelle 4 erhalten, welche Polyamid-Materialien ebenfalls rot mit guten Echtheitseigenschaften färben.

(Siehe Tabelle 4 Seite 19 f.)

Tabelle 4

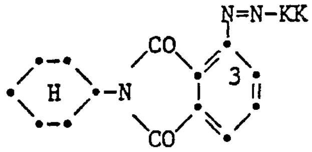 und 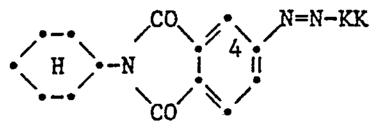

| Nr. | KK | Nuance auf Polyamid |
| --- | --- | --- |
| 67 | 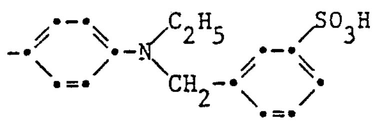 | rot |
| 68 | 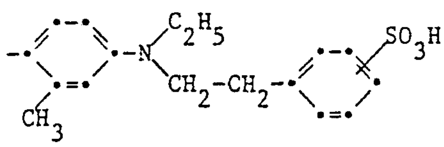 | do. |
| 69 | 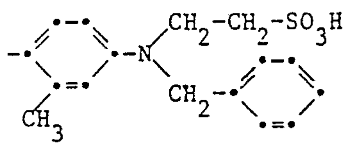 | do. |
| 70 | 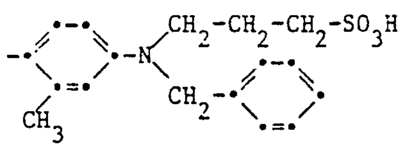 | do. |
| 71 | 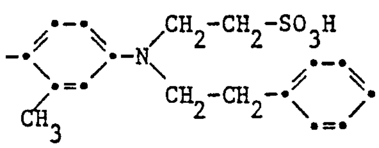 | do. |
| 72 | 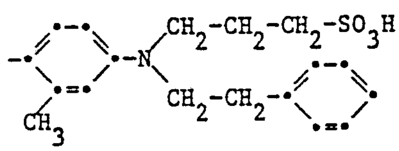 | do. |
| 73 | 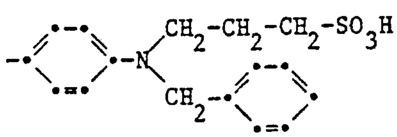 | do. |
| 74 | 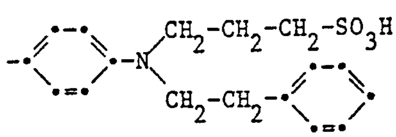 | do. |

Führt man die Azokupplung wie im Beispiel 26 beschrieben aus und setzt als Diazokomponente die bromhaltigen Phthalimid-Derivate des Beispiels 21 ein, so erhält man die Farbstoffe der folgenden Tabelle 5. Diese Farbstoffe färben Polyamid aus schwach saurem Bad in blaustichig-roten Tönen, welche gute Echtheitseigenschaften aufweisen.

Tabelle 5

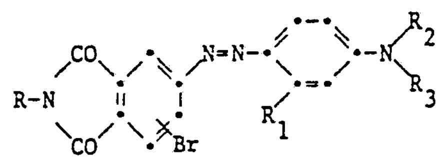

| Nr. | R | $R_1$ | $R_2$ | $R_3$ |
|---|---|---|---|---|
| 75 | $H_5C_2-$ | $-CH_3$ | $-C_2H_5$ | 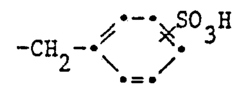 |
| 76 | do. | H | do. | do. |
| 77 | do. | do. | do. | 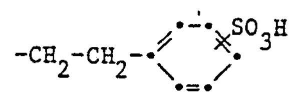 |
| 78 | do. | $-CH_3$ | do. | do. |
| 79 | do. | do. | $-C_2H_4-SO_3H$ | 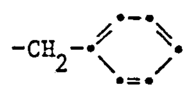 |
| 80 | do. | do. | $n-C_3H_6-SO_3H$ | do. |
| 81 | do. | do. | do. | 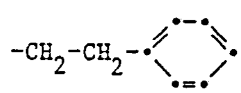 |
| 82 | do. | do. | do. | 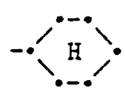 |
| 83 | do. | do. | $-C_2H_4-SO_3H$ | do. |
| 84 | 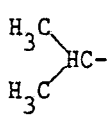 | do. | $-C_2H_5$ | 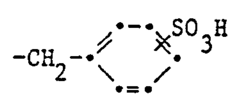 |
| 85 | 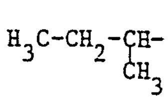 | do. | do. | do. |

Beispiel 86

Man rührt ein Gemisch, bestehend aus 9,8 g der Verbindung der Formel

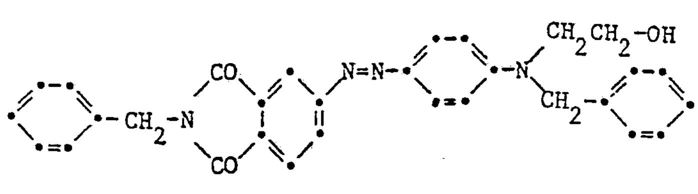

(erhalten durch Kupplung von N-Benzyl-4-amino-phthalimid auf N-Benzyl-N-hydroxyäthyl-anilin), 7,75 g Sulfaminsäure und 30 ml Pyridin während 30 Minuten bei einer Temperatur von 98-100 °C, worauf man das Pyridin am Rotationsverdampfer im Vakuum möglichst vollständig entfernt. Man nimmt den Rückstand in 20 ml Wasser auf, stellt mit Natronlauge auf pH 7 und dampft erneut im Vakuum bis zur Trockne ein. Der Rückstand wird im Trockenschrank im Vakuum bei 70 °C getrocknet. Das so erhaltene Natriumsalz des Farbstoffes der Formel

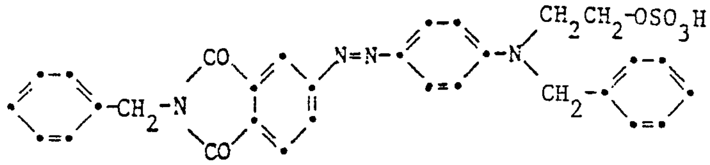

löst sich in Wasser mit roter Farbe.

Die mit diesem Farbstoff aus saurem Bad auf Polyamid erhältlichen roten Färbungen sind gut lichtecht.

In analoger Weise werden die in den folgenden Tabellen 6 und 7 aufgeführten Farbstoffe erhalten, welche Polyamid aus saurem Bad in roten Tönen mit guten Echtheitseigenschaften färben.

Tabelle 6

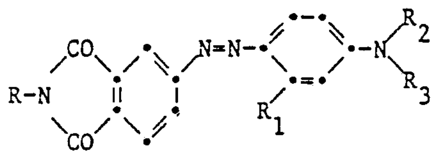

| Nr. | R | $R_1$ | $R_2$ | $R_3$ |
|---|---|---|---|---|
| 87 | 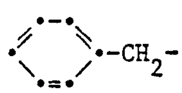 | $-CH_3$ | $-CH_2-CH_2-OSO_3H$ | 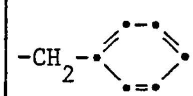 |
| 88 | do. | $-CH_3$ | do. | 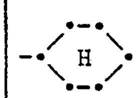 |
| 89 | do. | do. | do. | 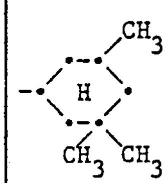 |
| 90 | 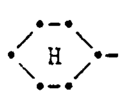 | do. | do. | do. |
| 91 | do. | do. | do. | 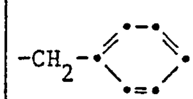 |
| 92 | do. | do. | do. | 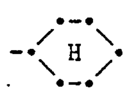 |

Tabelle 7

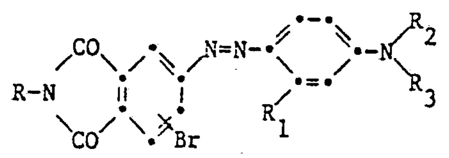

| Nr. | R | $R_1$ | $R_2$ | $R_3$ |
|---|---|---|---|---|
| 93 | $H_5C_2-$ | $-CH_3$ | $-CH_2-CH_2-OSO_3H$ | $-CH_2-$ 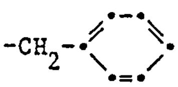 |
| 94 | do. | H | do. | do. |
| 95 | do. | do. | do. | 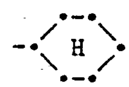 |
| 96 | do. | $-CH_3$ | do. | do. |
| 97 | do. | do. | do. | 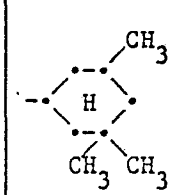 |
| 98 | 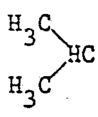 | do. | do. | $-CH_2-$ 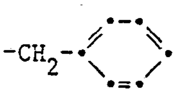 |
| 99 | do. | do. | do. | 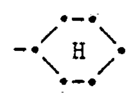 |
| 100 | 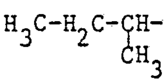 | do. | do. | do. |
| 101 | do. | do. | do. | $-CH_2-$ 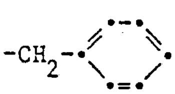 |
| 102 | $H_5C_2-$ | do. | do. | $-CH_2-CH_2-$ 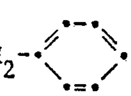 |
| 103 | 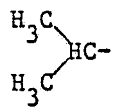 | do. | do. | do. |

Verwendet man in den voraufgegangenen Beispielen, welche sich von 4-Amino-phthalimid-Derivaten ableiten, äquivalente Mengen der entsprechenden 3-Amino-phthalimid-Derivate, so erhält man bei sonst gleichem Vorgehen (siehe Beispiel 26 und 86) die Farbstoffe der folgenden Tabellen 8 und 9, welche ähnliche Eigenschaften aufweisen, wie die entsprechenden Farbstoffe, die sich von 4-Amino-phthalimid-Derivaten ableiten. Besagte Farbstoffe färben Polyamid aus saurem Bad ebenfalls rot mit vergleichbaren Echtheitseigenschaften.

Tabelle 8

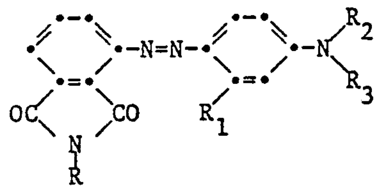

| Nr. | R | $R_1$ | $R_2$ | $R_3$ |
|---|---|---|---|---|
| 104 | $-CH_2-$ 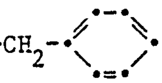 | $-CH_3$ | $-C_2H_5$ | $-CH_2-$ 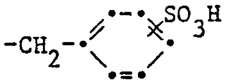 |
| 105 | do. | H | do. | do. |
| 106 | do. | do. | do. | $-CH_2-CH_2-$ 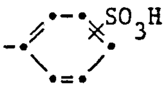 |
| 107 | do. | $-CH_3$ | do. | do. |
| 108 | do. | do. | $-CH_2CH_2-OSO_3H$ | $-CH_2-$ 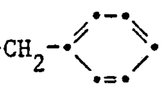 |
| 109 | do. | do. | do. | 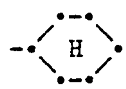 |
| 110 | 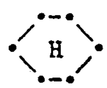 | $-CH_3$ | $-C_2H_5$ | $-CH_2-$ 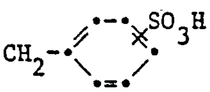 |
| 111 | do. | H | do. | do. |
| 112 | 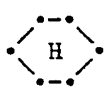 | H | $-C_2H_5$ | $-CH_2CH_2-$ 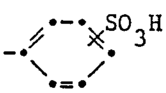 |
| 113 | do. | $-CH_3$ | do. | do. |
| 114 | do. | do. | $-CH_2CH_2-OSO_3H$ | $-CH_2-$ 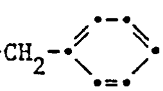 |
| 115 | do. | do. | do. | 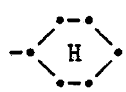 |
| 116 | 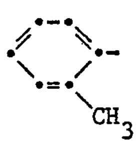 | do. | $-C_2H_5$ | $-CH_2-$ 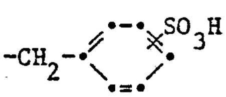 |

Tabelle 8 (Fortsetzung)

| Nr. | R | $R_1$ | $R_2$ | $R_3$ |
|---|---|---|---|---|
| 117 | 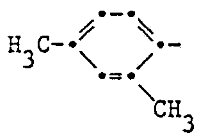 | do. | do. | do. |
| 118 | 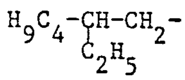 | do. | do. | do. |
| 119 | do. | do. | $-CH_2CH_2-OSO_3H$ | 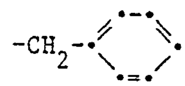 |
| 120 | do. | do. | do. | 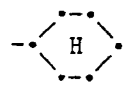 |
| 121 | 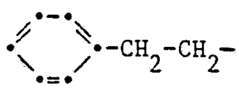 | do. | $-C_2H_5$ | 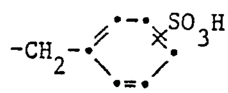 |
| 122 | do. | H | do. | do. |
| 123 | do. | do. | do. | 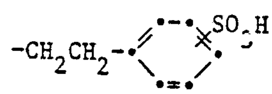 |
| 124 | 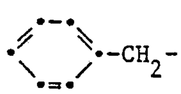 | $-CH_3$ | $-(CH_2)_3-SO_3H$ | 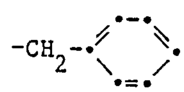 |
| 125 | 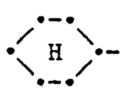 | do. | do. | do. |

Tabelle 9

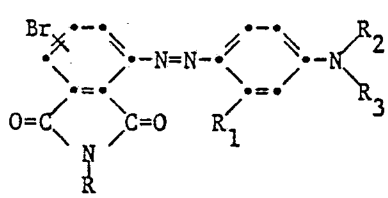

| Nr. | R | $R_1$ | $R_2$ | $R_3$ |
|---|---|---|---|---|
| 126 | $-C_2H_5$ | $-CH_3$ | $-C_2H_5$ | 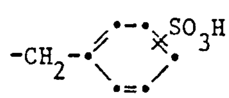 |

Tabelle 9 (Fortsetzung)

| Nr. | R | $R_1$ | $R_2$ | $R_3$ |
|---|---|---|---|---|
| 127 | do. | H | do. | do. |
| 128 | do. | do. | do. | $-CH_2CH_2-$ 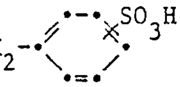 |
| 129 | 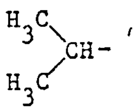 | $-CH_3$ | do. | $-CH_2-$ 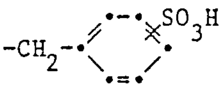 |
| 130 | 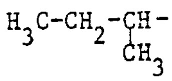 | do. | do. | do. |
| 131 | do. | do. | $-CH_2CH_2-OSO_3H$ | $-CH_2-$ 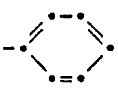 |
| 132 | do. | do. | $-(CH_2)_3-SO_3H$ | do. |
| 133 | 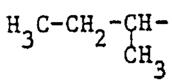 | $-CH_3$ | $-(CH_2)_3-SO_3H$ | 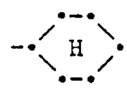 |
| 134 | do. | do. | $-CH_2CH_2-OSO_3H$ | do. |
| 135 | $-C_2H_5$ | do. | do. | do. |
| 136 | do. | do. | do. | $-CH_2-$ 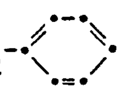 |
| 137 | do. | do. | $-CH_2CH_2-OSO_3H$ | do. |
| 138 | 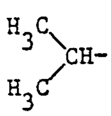 | do. | do. | do. |
| 139 | do. | do. | $-(CH_2)_3SO_3H$ | do. |
| 140 | do. | do. | do. | 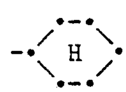 |
| 141 | do. | do. | $-CH_2CH_2-OSO_3H$ | do. |

Beispiel 142

Man rührt ein Gemisch bestehend aus 5,35 g der Verbindung der Formel

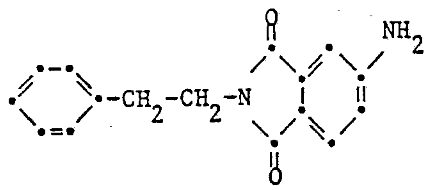

und 50 g Oleum (10 % $SO_3$-Gehalt) während 6 Std. bei 20-25 °C, worauf man den Ansatz auf eine Mischung von 80 g Eis und 20 ml Wasser austrägt.

Die ausgefällte Sulfosäure der Formel

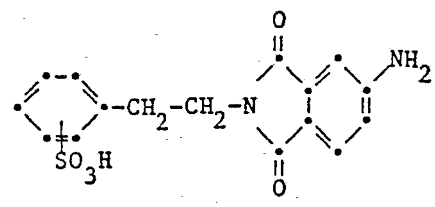

wird abfiltriert und gut abgepresst. Zur Diazotierung schlämmt man dieselbe in 75 ml Wasser an, stellt mit Natronlauge auf pH 7 und gibt 5 ml 4n-Nitritlösung zu. Man lässt dieses Gemisch bei gutem Rühren bei 0-2 °C zu einer Mischung bestehend aus 40 g Eis, 10 ml 36 %iger Salzsäure und 0,10 ml 4n-Nitritlösung zulaufen, worauf man noch 1 Stunde bei 0-2 °C nachrührt. Ein Ueberschuss an Nitrit wird durch Zugabe von Sulfaminsäure zerstört.

Durch Zugabe von Salzsäure zu einer Mischung aus 4,70 g N-Benzyl-N-äthyl-m-toluidin und 20 ml Wasser wird eine Lösung hergestellt, welche man zur oben erhaltenen Diazo-Suspension zulaufen lässt. Durch Zugabe von Natronlauge stellt man den pH-Wert auf 3-3,5 und rührt bei 0-5 °C bis zur Beendigung der Kupplung. Der Farbstoff wird durch Ansäuern mit Salzsäure isoliert, anschliessend in Wasser angeschlämmt und nach Neutralisation mit Natronlauge in üblicher Weise durch Aussalzen isoliert. Der erhaltene Farbstoff der Formel

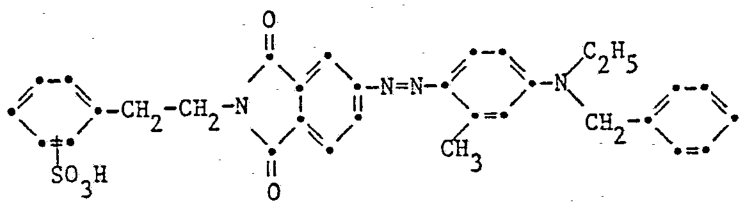

bildet nach dem Trocknen ein rotes Pulver, welches sich in Wasser mit roter Farbe löst. Die mit diesem Farbstoff auf Polyamid-Materialien erzeugten roten Färbungen sind gut licht- und nassecht.

Verwendet man bei sonst gleichem Vorgehen äquivalente Mengen der in Tabelle 10 angegebenen Kupplungskomponenten, so erhält man die Farbstoffe der folgenden Tabelle 10.

(Siehe Tabelle 10 Seite 27 f.)

Tabelle 10

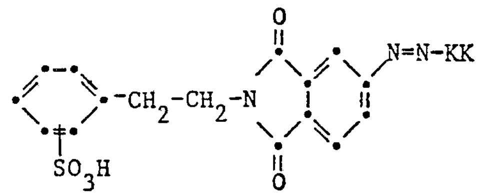

| Nr. | KK | Nuance auf Polyamid |
|---|---|---|
| 143 | 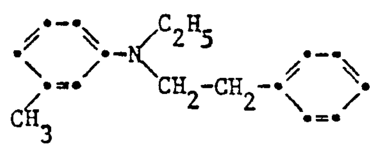 | rot |
| 144 | 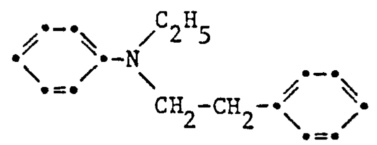 | do. |
| 145 | 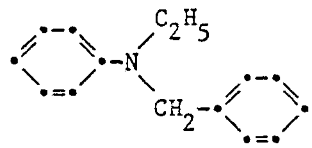 | do. |

Verwendet man bei sonst gleichem Vorgehen anstelle der oben aufgeführten Ausgangsverbindung dieselbe Menge eines Isomerengemisches, das die Amine der Formeln

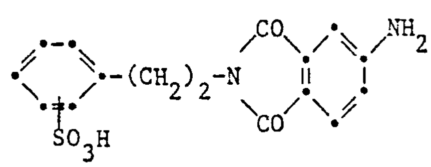

und

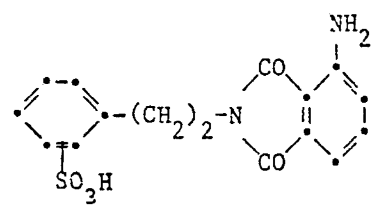

enthält, (analog der beschriebenen Benzyl-Verbindung durch Umsetzung von β-Phenyläthylamin und Nitro-phthalsäure-Gemisch in Eisessig, Hydrieren der Nitrofunktion und schliesslich Sulfonieren des Phenylrestes erhalten), so erhält man die Farbstoffgemische der folgenden Tabelle 11, welche Polyamid-Materialien bei pH 6 rot mit guten Echtheits-Eigenschaften färben und welche eine sehr gute Löslichkeit verbunden mit einer geringen Hartwasser-Empfindlichkeit aufweisen.

(Siehe Tabelle 11 Seite 28 f.)

Tabelle 11

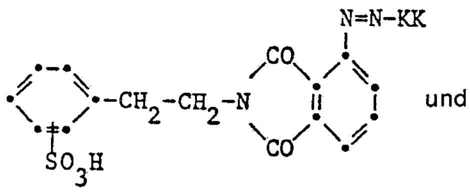 und 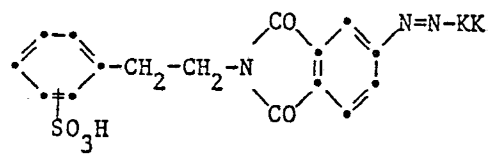

| Nr. | KK | Nuance auf Polyamid |
|---|---|---|
| 146 | 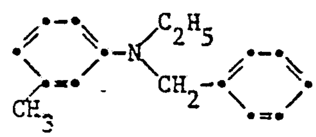 | rot |
| 147 | 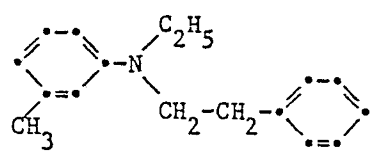 | do. |
| 148 | 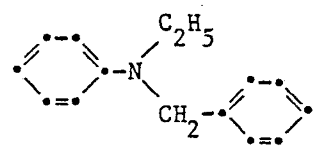 | do. |
| 149 | 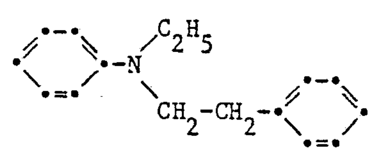 | do. |

Beispiel 150

Man bereitet ein Färbebad aus 4 000 Teilen Wasser, 4 Teilen Ammoniumacetat, 2 Teilen des Farbstoffes gemäss Beispiel 26 und so viel Essigsäure, dass der pH-Wert des Bades 6 beträgt. In das erhaltene Färbebad geht man mit 100 Teilen eines synthetischen Polyamidtricots ein, erhitzt es innerhalb einer halben Stunde zum Kochen und färbt 45 Minuten bei 100 °C. Man erhält eine rote Färbung mit guten Nassechtheiten.

Beispiel 151

100 Teile Wollstrickgarn werden bei 50 °C in ein Färbebad eingeführt, das auf 4 000 Teile Wasser 2 Teile des Farbstoffes des Beispiels 26, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine rote Wollfärbung mit guten Echtheitseigenschaften.

**Patentansprüche**

1. Monoazoverbindungen der Formel I oder deren Mischungen untereinander

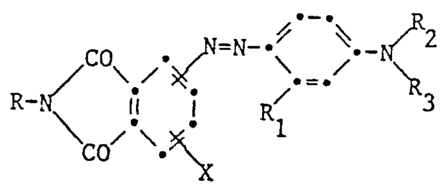

(I)

worin bedeuten :

R ein gegebenenfalls durch Alkyl ($C_1$-$C_4$) substituierter Phenyl- oder Naphthylrest, ein gegebenenfalls durch Alkyl ($C_1$-$C_4$) substituierter Cycloalkylrest, ein gegebenenfalls durch Cyano, Halogen, Phenyl oder Sulfophenyl substituierter Alkylrest ($C_1$-$C_8$), oder ein gegebenenfalls durch Halogen substituierter Propenylrest,

X Wasserstoff oder Halogen,

$R_1$ Wasserstoff oder ein Alkylrest ($C_1$-$C_4$),

$R_2$ ein Alkylrest ($C_1$-$C_8$), ein Sulfatoalkylrest ($C_1$-$C_4$), ein Sulfoalkylrest ($C_1$-$C_4$) oder ein Cycloalkylrest, und

$R_3$ ein gegebenenfalls durch Alkyl ($C_1$-$C_4$) substituierter Cycloalkylrest oder ein

Alkylen-($C_1$-$C_4$)- 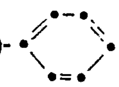 Rest,

worin der Phenylrest noch durch —$SO_3H$ substituiert sein kann, mit der Bedingung, dass die Monoazoverbindung der Formel (I) nur eine und nicht mehr als eine Sulfo- oder Sulfatogruppe enthält.

2. Monoazoverbindungen gemäss Anspruch 1, dadurch gekennzeichnet, dass die Azobrücke in p-Stellung zu einer der beiden Carbonylgruppen gebunden ist.

3. Monoazoverbindungen gemäss Anspruch 1, dadurch gekennzeichnet, dass $R_2$ einen Alkyl-($C_1$-$C_8$)- oder Cycloalkylrest und $R_3$ einen

Alkylen-($C_1$-$C_4$)- 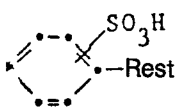 —Rest

bedeutet, und R, $R_1$ und X die in Anspruch 1 angegebenen Bedeutungen haben.

4. Monoazoverbindungen gemäss Anspruch 1, dadurch gekennzeichnet, dass $R_2$ einen Sulfatoalkyl-($C_1$-$C_4$)- oder Sulfoalkyl-($C_1$-$C_4$)-rest und $R_3$ einen

Alkylen-($C_1$-$C_4$)- 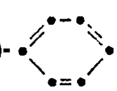 Rest

oder einen gegebenenfalls durch Alkyl ($C_1$-$C_4$) substituierten Cycloalkylrest bedeutet, und R, $R_1$ und X die in Anspruch 1 angegebenen Bedeutungen haben.

5. Monoazoverbindungen gemäss Anspruch 1, dadurch gekennzeichnet, dass R ein durch Sulfophenyl substituierter Alkylrest ($C_1$-$C_8$) ist, und $R_1$, $R_2$, $R_3$ und X die in Anspruch 1 angegebenen Bedeutungen haben.

6. Monoazoverbindungen gemäss Anspruch 1, dadurch gekennzeichnet, dass R ein gegebenenfalls durch Alkyl ($C_1$-$C_4$) substituierter Phenylrest, ein gegebenenfalls durch Alkyl ($C_1$-$C_4$) substituierter Cyclohexylrest, ein gegebenenfalls durch Cyano, Phenyl oder Sulfophenyl substituierter Alkylrest ($C_1$-$C_8$) oder ein gegebenenfalls durch Halogen substituierter Propenylrest ist, und X, $R_1$, $R_2$ und $R_3$ die in Anspruch 1 angegebenen Bedeutungen haben.

7. Monoazoverbindungen gemäss Anspruch 6, dadurch gekennzeichnet, dass $R_1$ Wasserstoff oder Methyl und X Wasserstoff oder Brom ist, und R, $R_2$ und $R_3$ die in Anspruch 6 angegebenen Bedeutungen haben.

8. Monoazoverbindungen gemäss Anspruch 7, dadurch gekennzeichnet, dass $R_2$ einen Alkylrest ($C_2$-$C_8$) oder Cyclohexyl und $R_3$ einen

Alkylen-($C_1$-$C_2$)- 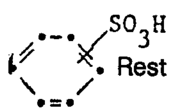 Rest

bedeutet, und R, $R_1$ und X die in Anspruch 7 angegebenen Bedeutungen haben.

9. Monoazoverbindungen gemäss Anspruch 7, dadurch gekennzeichnet, dass $R_2$ Sulfoäthyl, Sulfopropyl oder Sulfatoäthyl und $R_3$

Alkylen-($C_1$-$C_2$)- 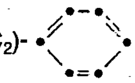

oder gegebenenfalls durch Methyl substituiertes Cyclohexyl bedeutet, und R, $R_1$ und X die in Anspruch 7 angegebenen Bedeutungen haben.

10. Monoazoverbindungen gemäss Anspruch 7, dadurch gekennzeichnet, dass R einen Sulfobenzyl- oder β-Sulfophenäthylrest oder einen Rest der Formel

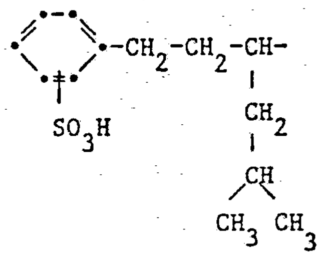

$R_2$ Aethyl und
$R_3$ den Benzyl- oder β-Phenäthylrest bedeutet, und
$R_1$ und X die in Anspruch 7 angegebenen Bedeutungen haben.

11. Monoazoverbindungen gemäss Anspruch 8, dadurch gekennzeichnet, dass
R einen gegebenenfalls durch eine oder mehrere Methylgruppen substituierten Cyclohexylrest, den Benzyl- oder β-Phenäthylrest, oder einen unverzweigten oder verzweigten Alkyl-($C_2$-$C_8$)-rest,
$R_2$ Aethyl, Octyl oder Cyclohexyl und
$R_3$ den

Alkylen-($C_1$-$C_2$)- 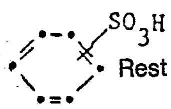 Rest

bedeutet, und $R_1$ und X die in Anspruch 8 angegebenen Bedeutungen haben.

12. Monoazoverbindungen gemäss Anspruch 9, dadurch gekennzeichnet, dass R einen gegebenenfalls durch eine oder mehrere Methylgruppen substituierten Cyclohexylrest, den Benzyl- oder β-Phenäthylrest, oder einen unverzweigten oder verzweigten Alkyl-($C_2$-$C_8$)-rest bedeutet und $R_1$, $R_2$, $R_3$ und X die in Anspruch 9 angegebenen Bedeutungen haben.

13. Monoazoverbindungen gemäss Anspruch 9, dadurch gekennzeichnet, dass $R_2$ Sulfatoäthyl bedeutet.

14. Monoazoverbindungen gemäss Anspruch 11, dadurch gekennzeichnet, dass R Cyclohexyl bedeutet, und $R_1$, $R_2$, $R_3$ und X die in Anspruch 11 angegebenen Bedeutungen haben.

15. Das Isomerengemisch der Monoazoverbindungen gemäss Anspruch 14 der Formeln

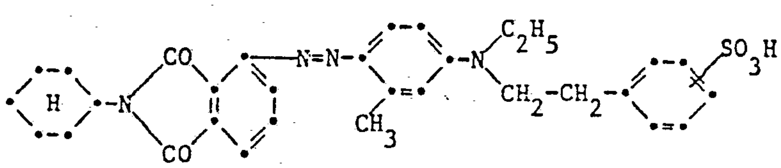

und

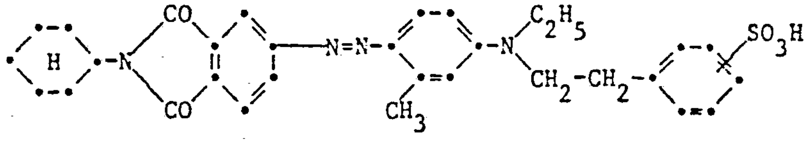

16. Die Monoazoverbindung gemäss Anspruch 10 der Formel

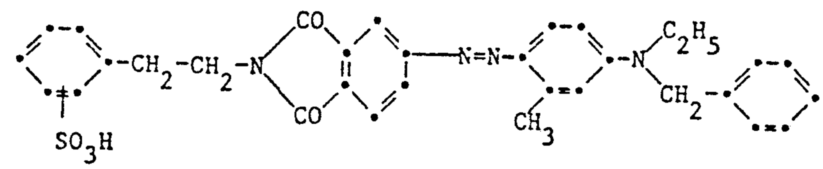

17. Verfahren zur Herstellung von Monoazoverbindungen der Formel I gemäss Anspruch 1, dadurch gekennzeichnet, dass man eine Verbindung der Formel II

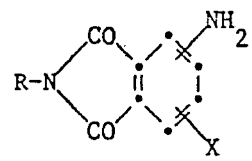 (II)

diazotiert und mit einer Kupplungskomponente der Formel III

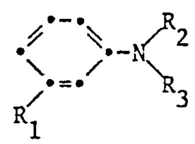 (III)

in welchen Formeln II und III die Symbole R, X, $R_1$, $R_2$ und $R_3$ die unter Formel I angegebene Bedeutung haben, kuppelt, wobei die Ausgangsverbindungen II und III so gewählt werden, dass einer der Reste R, $R_2$ oder $R_3$ eine Sulfogruppe oder der Rest $R_2$ eine Hydroxygruppe enthält, wobei letztere nach der Kupplungsreaktion zur Sulfatogruppe verestert wird.

18. Verwendung der Monoazoverbindungen gemäss Ansprüchen 1 bis 16 oder der gemäss Anspruch 17 erhaltenen Monoazoverbindungen als saure Farbstoffe zum Färben und Bedrucken von natürlichen und synthetischen Textilmaterialien.

19. Verwendung gemäss Anspruch 18 zum Färben und Bedrucken von Polyamid- und Wollmaterialien.

20. Die mittels den Monoazoverbindungen der Formel I gemäss Anspruch 1 gefärbten und bedruckten natürlichen und synthetischen Textilmaterialien.

**Claims**

1. A monoazo compound of the formula I

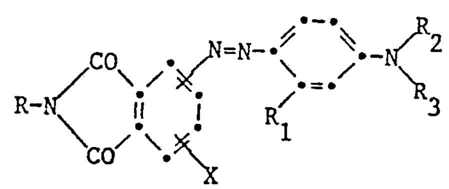 (I)

in which

R is a phenyl or naphthyl radical which is unsubstituted or substituted by $C_1$-$C_4$ alkyl, or is a cycloalkyl radical which is unsubstituted or substituted by $C_1$-$C_4$ alkyl, or is a $C_1$-$C_8$ alkyl radical which is unsubstituted or substituted by cyano, halogen, phenyl or sulfophenyl, or is a propenyl radical which is unsubstituted or substituted by halogen,

X is hydrogen or halogen,

$R_1$ is hydrogen or a $C_1$-$C_4$ alkyl radical,

$R_2$ is a $C_1$-$C_8$ alkyl radical, a $C_1$-$C_4$ sulfatoalkyl radical, a $C_1$-$C_4$ sulfoalkyl radical or a cycloalkyl radical and

$R_3$ is a cycloalkyl radical which is unsubstituted or substituted by $C_1$-$C_4$ alkyl, or is a

$C_1$-$C_4$ alkylene- 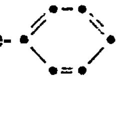 radical,

in which the phenyl radical can also be substituted by $-SO_3H$, with the proviso that the monoazo

compound of the formula (I) contains only one and not more than one sulfo or sulfato group, or a mixture of such compounds.

2. A monoazo compound according to claim 1, in which the azo bridge is attached in the p-position relative to one of the two carbonyl groups.

3. A monoazo compound according to claim 1, in which $R_2$ is a $C_1$-$C_8$ alkyl radical or a cycloalkyl radical and $R_3$ is a

$C_1$-$C_4$ alkylene- 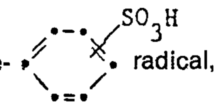 radical,

and R, $R_1$ and X are as defined in claim 1.

4. A monoazo compound according to claim 1, in which $R_2$ is a $C_1$-$C_4$ sulfatoalkyl or $C_1$-$C_4$ sulfoalkyl radical and $R_3$ is a

$C_1$-$C_4$ alkylene- 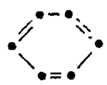 radical,

or is a cycloalkyl radical which is unsubstituted or substituted by $C_1$-$C_4$ alkyl, and R, $R_1$ and X are as defined in claim 1.

5. A monoazo compound according to claim 1, in which R is a $C_1$-$C_8$ alkyl radical which is substituted by sulfophenyl, and $R_1$, $R_2$, $R_3$ and X are as defined in claim 1.

6. A monoazo compound according to claim 1, in which R is a phenyl radical which is unsubstituted or substituted by $C_1$-$C_4$ alkyl, or is a cyclohexyl radical which is unsubstituted or substituted by $C_1$-$C_4$ alkyl, or is a $C_1$-$C_8$ alkyl radical which is unsubstituted or substituted by cyano, phenyl or sulfophenyl, or is a propenyl radical which is unsubstituted or substituted by halogen, and X, $R_1$, $R_2$ and $R_3$ are as defined in claim 1.

7. A monoazo compound according to claim 6, in which $R_1$ is hydrogen or methyl and X is hydrogen or bromine, and R, $R_2$ and $R_3$ are as defined in claim 6.

8. A monoazo compound according to claim 7, in which $R_2$ is a $C_2$-$C_8$ alkyl radical or cyclohexyl and $R_3$ is a

$C_1$-$C_2$ alkylene- 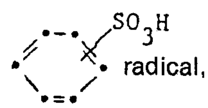 radical,

and R, $R_1$ and X are as defined in claim 7.

9. A monoazo compound according to claim 7, in which $R_2$ is sulfoethyl, sulfopropyl or sulfatoethyl and $R_3$ is

$C_1$-$C_2$ alkylene- 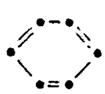 ,

or is cyclohexyl which is unsubstituted or substituted by methyl, and R, $R_1$ and X are as defined in claim 7.

10. A monoazo compound according to claim 7, in which R is a sulfobenzyl or β-sulfophenethyl radical or a radical of the formula

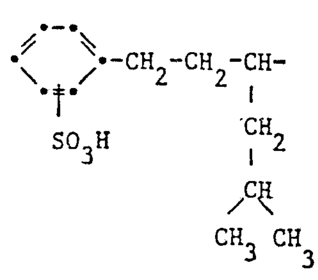

$R_2$ is ethyl and
$R_3$ is the benzyl or β-phenethyl radical, and
$R_1$ and X are as defined in claim 7.

11. A monoazo compound according to claim 8, in which R is a cyclohexyl radical which is unsubstituted or substituted by one or more methyl groups, or is the benzyl or β-phenethyl radical, or is a straight chain or branched $C_2$-$C_8$ alkyl radical, $R_2$ is ethyl, octyl or cyclohexyl and $R_3$ is the

$C_1$-$C_2$ alkylene- 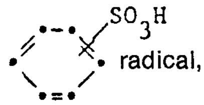 radical,

and $R_1$ and X are as defined in claim 8.

12. A monoazo compound according to claim 9, in which R is a cyclohexyl radical which is unsubstituted or substituted by one or more methyl groups, or is the benzyl or β-phenethyl radical, or is a straight chain or branched $C_2$-$C_8$ alkyl radical, and $R_1$, $R_2$, $R_3$ and X are as defined in claim 9.

13. A monoazo compound according to claim 9, in which $R_2$ is sulfatoethyl.

14. A monoazo compound according to claim 11, in which R is cyclohexyl, and $R_1$, $R_2$, $R_3$ and X are as defined in claim 11.

15. The isomer mixture of the monoazo compounds according to claim 14, of the formulae

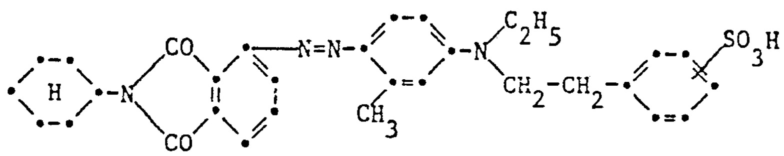

and

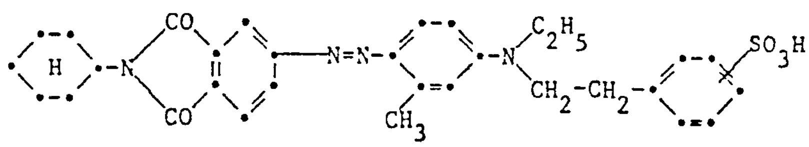

16. The monoazo compound, according to claim 10, of the formula

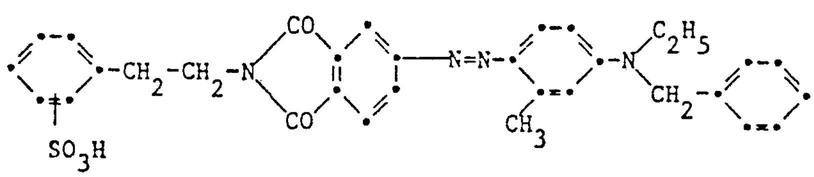

17. A process for the preparation of a monoazo compound of the formula I according to claim 1, which comprises diazotising a compound of the formula II

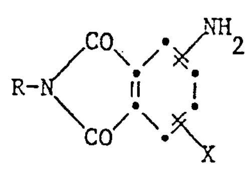

(II)

and coupling the diazotisation product to a coupling component III

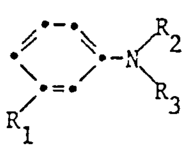

(III)

in which formulae II and III, R, X, $R_1$, $R_2$ and $R_3$ are as defined for formula I, the starting compounds II and III being chosen such that one of the radicals R, $R_2$ or $R_3$ contains a sulfo group or the radical $R_2$ contains a hydroxyl group, the latter being esterified to the sulfato group after the coupling.

18. The use of a monoazo compound according to any one of claims 1 to 16 or of a monoazo

compound obtained according to claim 17 as an acid dye for dyeing and printing a natural or synthetic textile material.

19. The use according to claim 18, for dyeing and printing a polyamide or wool material.

20. A natural or synthetic textile material dyed by means of a monoazo compound of the formula I according to claim 1.

**Revendications**

1. Composés monoazoïques de formule I ou leurs mélanges mutuels

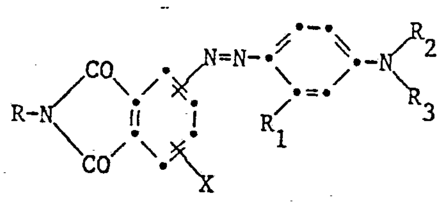

(I)

dans laquelle

R est un reste phényle ou naphtyle éventuellement substitué par un radical alkyle en $C_1$-$C_4$, un reste cycloalkyle éventuellement substitué par un radical alkyle en $C_1$-$C_4$, un reste alkyle en $C_1$-$C_8$ substitué éventuellement par un radical cyano, halogéno, phényle ou sulfophényle ou bien un reste propényle éventuellement substitué par un halogène,

X est l'hydrogène ou un halogène,

$R_1$ est l'hydrogène ou un reste alkyle en $C_1$-$C_4$,

$R_2$ est un reste alkyle en $C_1$-$C_8$, un reste sulfatoalkyle en $C_1$-$C_4$, un reste sulfoalkyle en $C_1$-$C_4$ ou un reste cycloalkyle, et

$R_3$ est un reste cycloalkyle éventuellement substitué par un radical alkyle en $C_1$-$C_4$ ou bien un reste

alkylène-($C_1$-$C_4$)- 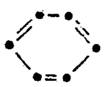

dans lequel le reste phényle peut être encore substitué par —$SO_3H$, à condition que le composé monoazoïque de formule (I) contienne un seul groupe sulfo ou sulfato.

2. Composés monoazoïques selon la revendication 1, caractérisés par le fait que le pont azoïque est lié en position para par rapport à un des deux groupes carbonyle.

3. Composés monoazoïques selon la revendication 1, caractérisés par le fait que $R_2$ est un reste alkyle en $C_1$-$C_8$ ou cycloalkyle, et $R_3$ est un reste

alkylène-($C_1$-$C_4$)- 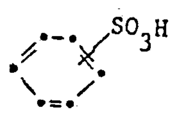

et R, $R_1$ et X ont les significations données dans la revendication 1.

4. Composés monoazoïques selon la revendication 1, caractérisés par le fait que $R_2$ est un reste sulfatoalkyle en $C_1$-$C_4$ ou sulfoalkyle en $C_1$-$C_4$, et $R_3$ est un reste

alkylène-($C_1$-$C_4$)- 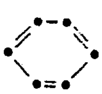

ou bien un reste cycloalkyle éventuellement substitué par un radical alkyle en $C_1$-$C_4$, et R, $R_1$ et X ont les significations données dans la revendication 1.

5. Composés monoazoïques selon la revendication 1, caractérisés par le fait que R est un reste alkyle en $C_1$-$C_8$ substitué par un groupe sulfophényle, et $R_1$, $R_2$, $R_3$ et X ont les significations données dans la revendication 1.

6. Composés monoazoïques selon la revendication 1, caractérisés par le fait que R est un reste phényle éventuellement substitué par un radical alkyle en $C_1$-$C_4$, un reste cyclohexyle éventuellement substitué par un radical alkyle en $C_1$-$C_4$, un reste alkyle en $C_1$-$C_8$ éventuellement substitué par un radical cyano, phényle ou sulfophényle, ou bien un reste propényle éventuellement substitué par un halogène, et X, $R_1$, $R_2$ et $R_3$ ont les significations données dans la revendication 1.

7. Composés monoazoïques selon la revendication 6, caractérisés par le fait que $R_1$ est l'hydrogène

ou le reste méthyle, et X est l'hydrogène ou le brome, et R, $R_2$ et $R_3$ ont les significations données dans la revendication 6.

8. Composés monoazoïques selon la revendication 7, caractérisés par le fait que $R_2$ est un reste alkyle en $C_2$-$C_8$ ou cyclohexyle, et $R_3$ est un reste

alkylène-($C_1$-$C_2$)- 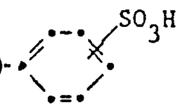

et R, $R_1$ et X ont les significations données dans la revendication 7.

9. Composés monoazoïques selon la revendication 7, caractérisés par le fait que $R_2$ est un reste sulfoéthyle, sulfopropyle ou sulfatoéthyle, et $R_3$ est un reste

alkylène-($C_1$-$C_2$)- 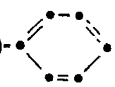

ou bien le reste cyclohexyle éventuellement substitué par le radical méthyle, et R, $R_1$ et X ont les significations données dans la revendication 7.

10. Composés monoazoïques selon la revendication 7, caractérisés par le fait que R est un reste sulfobenzyle ou β-sulfophénéthyle, ou bien un reste de formule :

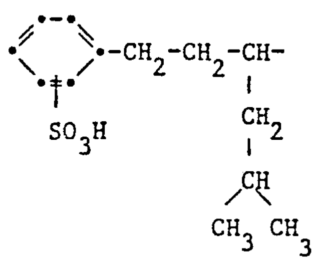

$R_2$ est un reste éthyle, et

$R_3$ est le reste benzyle ou β-phénéthyle, et

$R_1$ et X ont les significations données dans la revendication 7.

11. Composés monoazoïques selon la revendication 8, caractérisés par le fait que

R est un reste cyclohexyle éventuellement substitué par un ou plusieurs groupes méthyle, le reste benzyle ou le reste β-phénéthyle ou bien un reste alkyle en $C_2$-$C_8$ non ramifié ou ramifié,

$R_2$ est un reste éthyle, octyle ou cyclohexyle, et

$R_3$ est le reste

alkylène-($C_1$-$C_2$)- 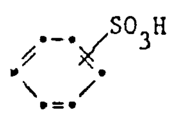

et $R_1$ et X ont les significations données dans la revendication 8.

12. Composés monoazoïques selon la revendication 9, caractérisés par le fait que R est un reste cyclohexyle éventuellement substitué par un ou plusieurs groupes méthyle, le reste benzyle ou β-phénéthyle, ou bien un reste alkyle en $C_2$-$C_8$ non ramifié ou ramifié, et $R_1$, $R_2$, $R_3$ et X ont les significations données dans la revendication 9.

13. Composés monoazoïques selon la revendication 9, caractérisés par le fait que $R_2$ est un reste sulfatoéthyle.

14. Composés monoazoïques selon la revendication 11, caractérisés par le fait que R est un reste cyclohexyle, et $R_1$, $R_2$, $R_3$ et X ont les significations données dans la revendication 11.

15. Le mélange d'isomères des composés monoazoïques selon la revendication 14 ayant les formules

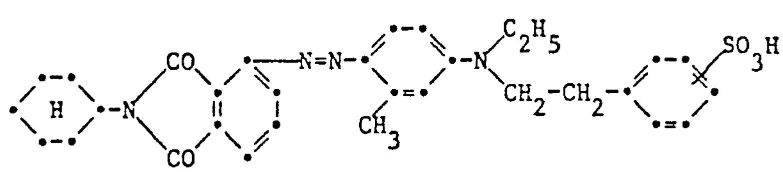

et

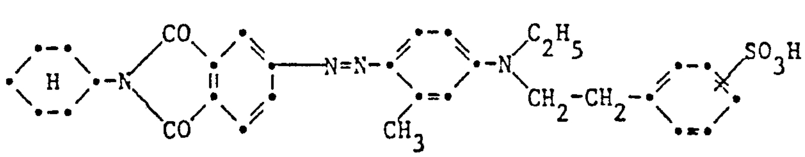

16. Le composé monoazoïque selon la revendication 10, ayant la formule

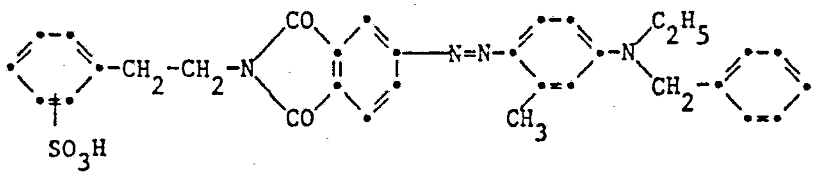

17. Procédé pour la préparation de composés monoazoïques de formule I selon la revendication 1, caractérisé par le fait qu'on diazote un composé de formule II

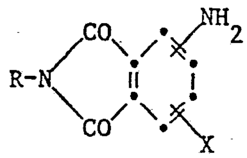

(II)

et qu'on copule avec un constituant de copulation de formule III

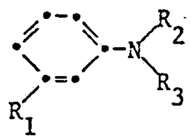

(III)

formules II et III dans lesquelles les symboles R, X, $R_1$, $R_2$ et $R_3$ ont les significations données sous la formule I, les composés de départ II et III étant choisis de façon à ce que l'un des restes R, $R_2$ ou $R_3$ contienne un groupe sulfo ou que le reste $R_2$ contienne un groupe hydroxyle, ce dernier groupe étant estérifié après la réaction de copulation en un groupe sulfato.

18. Utilisation des composés monoazoïques selon les revendications 1 à 16, ou des composés monoazoïques obtenus selon la revendication 17, comme colorants acides pour teindre et imprimer des matières textiles naturelles et synthétiques.

19. Utilisation selon la revendication 18, pour teindre et imprimer des matières en polyamide et en laine.

20. Les matières textiles naturelles et synthétiques teintes et imprimées au moyen des composés monoazoïques de formule I selon la revendication 1.